Europäisches Patentamt

European Patent Office

Office européen des brevets

(19)

(11)  **EP 1 435 752 A1**

(12)  **EUROPEAN PATENT APPLICATION**
published in accordance with Art. 158(3) EPC

(43) Date of publication:
**07.07.2004 Bulletin 2004/28**

(21) Application number: **01974793.0**

(22) Date of filing: **11.10.2001**

(51) Int Cl.⁷: **H04Q 9/00**

(86) International application number:
**PCT/JP2001/008941**

(87) International publication number:
**WO 2003/034776 (24.04.2003 Gazette 2003/17)**

(84) Designated Contracting States:
**DE FR GB**

(71) Applicant: **FUJITSU LIMITED**
**Kawasaki-shi, Kanagawa 211-8588 (JP)**

(72) Inventor: **HARA, Masahiro, FUJITSU LIMITED**
**Kawasaki-shi, Kanagawa 211-8588 (JP)**

(74) Representative: **Sunderland, James Harry**
**Haseltine Lake,**
**Imperial House,**
**15-19 Kingsway**
**London, WC 2W 6UD (GB)**

(54)  **DEVICE FOR USE IN SERVICE PROVIDING SYSTEM HAVING INTEGRATED COMPONENTS IN AD HOC NETWORK**

(57)      In an ad hoc network comprising an initiator for use by a user transmitting a request to provide a service, and a plurality of components, etc. such as a CD player, etc., the initiator collects a table of contents describing a service, etc. which can be provided by each component before receiving a service, refers to the information about a table of contents, and lists available services. A user is allowed to select a service, and receives a desired service from a device to which predetermined components are connected by cable or by wireless.

F I G.  8

# Description

## Technical Field

The present invention relates to a service providing system for a device capable of configuring an ad hoc network and establishing communications with a communications terminal.

## Background Art

In the conventional Internet technology, the Worldwide Web (WWW) for use with an URI (universal resource identifier), an URL (universal resource locator), etc. has been operated in an access method in which the positions of the resources and services (hereinafter a service generally refers to providing a function, data, etc.) are fixed. Therefore, in an ad hoc network in which a plurality of terminals form a local network by directly communicating with one another, and predetermined services are offered to users by integrating the functions of the respective terminals, different terminals are located in various places. As a result, a server often cannot detect which is the nearest terminal a user is physically located, and cannot designate a service available by the user because it is not clear what service is available by the user.

In an ad hoc network, available resources are limited because a portable terminal which can be operated by wireless is used in the network. With such a resource-limited portable terminal, one portable terminal cannot be loaded with all services. Therefore, a device is to be a single-function device, and integrated services are provided by combining a plurality of devices.

When a terminal capable of performing conventional communications (especially wireless communications) is connected to an ad hoc network, a user and each device are not informed of what services can be offered to users. To find services, an SLP (service location protocol) of an IP (Internet protocol) and an SDP (service discovery protocol) of Bluetooth are available. However, since the SLP finds resources according to the position information such as a URI and a URL, it is hard to apply it to an ad hoc network. Furthermore, since the SDP aims at generally detecting a profile indicating a function, a pinpoint service cannot be offered with each unit of resources specified. To offer a unit of significant service by combining a plurality of functions, it is necessary to provide a pinpoint service with each unit of resources specified.

## Disclosure of Invention

The present invention aims at providing an apparatus capable of providing a predetermined integrated service for a user by combining the respective services of a plurality of terminals.

The information terminal for use in the system according to the present invention is connected by cable or by wireless to one or more devices forming a network by cable or by wireless for offering a predetermined service by integrating the functions of one or more devices, and includes: an information collection unit for receiving, from each device, information about services which can be offered by a component which belongs to the one or more devices and performs a predetermined function; a service detection unit for detecting services which can be offered by combining the one or more devices according to the collected information; and a unit for instructing a device included in providing the services to provide a service based on the detected service.

According to the present invention, by a user issuing an instruction through an initiator which is a service designation unit, a predetermined service can be easily obtained in an ad hoc network which forms a different configuration depending on the location. The initiator communicates with the component of the device in the location to which the user belongs, obtains a table of contents, that is, the information about the service which can be offered from the component, and detect available services according to the information.

## Brief Description of Drawings

FIG. 1 shows the concept of the configuration of the system according to an embodiment of the present invention;

FIG. 2 shows the configuration indicating the terminal forming the system according to an embodiment of the present invention;

FIG. 3 shows a practical example (1) of an ad hoc network;

FIG. 4 shows a practical example (2) of an ad hoc network;

FIG. 5 shows the concept of the initiator checking an available service;

FIG. 6 shows the recording information about a table of contents;

FIG. 7 is an explanatory view of the relationship between the connection between components and the description of the table of contents;

FIG. 8 is an explanatory view (1) of a graph showing the concept of the connection between the components detected by the initiator;

FIG. 9 is an explanatory view (2) of a graph showing the concept of the connection between components detected by the initiator;

FIG. 10 is an explanatory view of the process of the initiator forming a branch between components;

FIG. 11 is a flowchart of generating a graph by an initiator;

FIG. 12 shows the process (1) of generating a branch;

FIG. 13 shows the process (2) of generating a branch;

FIG. 14 is an explanatory view of the process of selecting a path with a priority when a plurality of paths (a series of branches and the stack shown in FIG. 13) are detected;

FIG. 15 shows an example of a display of a list of services;

FIG. 16 is an explanatory view of the outline of the operation of a component when a service is provided;

FIG. 17 shows an example of a table of contents received by an initiator from each component before performing the path retrieving process;

FIG. 18 is a flowchart of the process of transmitting a table of contents from a component to an initiator;

FIG. 19 is a flowchart of the process of starting a service;

FIG. 20 shows an example of a data format of a graph of an initiator;

FIG. 21 is a view (1) showing the concept of the operation of a component quitting and entering an ad hoc network;

FIG. 22 is a view (2) showing the concept of the operation of a component quitting and entering an ad hoc network;

FIG. 23 is a view (3) showing the concept of the operation of a component quitting and entering an ad hoc network;

FIG. 24 is an explanatory view of the status transmit/receive process;

FIG. 25 is a flowchart of the status transfer process;

FIG. 26 shows a sequence of the communications of a table of contents between the initiator and the components;

FIG. 27 is a flowchart of the process of determining a path and offering a service after an initiator receives a table of contents;

FIG. 28 practically shows the operation according to an embodiment of the present invention;

FIG. 29 is a view (1) of the operation performed when the configuration of an ad hoc network is changed;

FIG. 30 is a view (2) of the operation performed when the configuration of an ad hoc network is changed;

FIG. 31 is a view (3) of the operation performed when the configuration of an ad hoc network is changed;

FIG. 32 is an explanatory view (1) of the practical operation shown in FIGS. 28 and 31;

FIG. 33 is an explanatory view (2) of the practical operation shown in FIGS. 28 and 31;

FIG. 34 is an explanatory view (3) of the practical operation shown in FIGS. 28 and 31;

FIG. 35 is an explanatory view (4) of the practical operation shown in FIGS. 28 and 31;

FIG. 36 is an explanatory view (5) of the practical operation shown in FIGS. 28 and 31;

FIG. 37 is an explanatory view (6) of the practical operation shown in FIGS. 28 and 31;

FIG. 38 is an explanatory view (7) of the practical operation shown in FIGS. 28 and 31;

FIG. 39 is an explanatory view (8) of the practical operation shown in FIGS. 28 and 31;

FIG. 40 is an explanatory view (9) of the practical operation shown in FIGS. 28 and 31;

FIG. 41 is an explanatory view (10) of the practical operation shown in FIGS. 28 and 31;

FIG. 42 is an explanatory view (10) of the practical operation shown in FIGS. 28 and 31;

FIG. 43 is an explanatory view (12) of the practical operation shown in FIGS. 28 and 31;

FIG. 44 is an explanatory view (13) of the practical operation shown in FIGS. 28 and 31;

FIG. 45 is an explanatory view (14) of the practical operation shown in FIGS. 28 and 31;

FIG. 46 shows an example of applying the embodiment to a PIM information management system; and

FIG. 47 is an explanatory view of the hardware environment requested when the function of the device including the initiator and the components according to an embodiment of the present invention is realized by a program.

**Best Mode for Carrying Out the Invention**

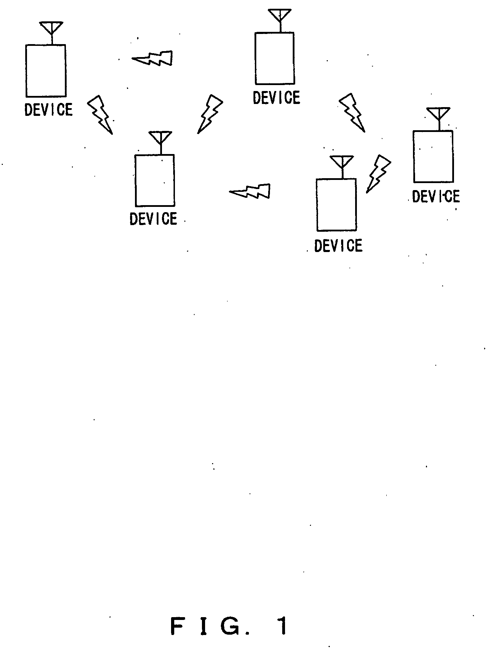

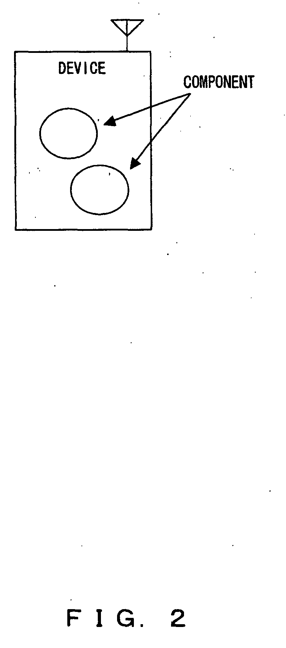

FIG. 1 shows the concept of the configuration of the system according to an embodiment of the present invention. FIG. 2 shows the configuration indicating the terminal forming the system according to an embodiment of the present invention.

In the present embodiment, a plurality of devices having communications capabilities (especially the function of performing wireless communications) form an ad hoc network as shown in FIG. 1. Each device provides a small service (function) as a component as shown in FIG. 2. Since a single component cannot offer a sufficient service, a service is provided by combining a plurality of components.

A device contains a device referred to as an initiator managed by a user. The initiator functions as a user interface with the user. However, it is not always necessary for an initiator to have a user interface, but a device (a display device and a user input device) as a user interface is required in an ad hoc network. However, an initiator normally has a user interface. Therefore, it is hereafter assumed that an initiator has a user interface. An initiator receives a request from a user, and requests a plurality of components to offer the functions, thereby providing the user with a service obtained by combining the services of the respective components. When a service is to be changed, when a service is completed, etc., a notification is issued to the user. Therefore, the initiator is an indispensable device in the ad hoc network. As a result, the initiator plays an important role by determining how to combine a plurality of components, transmitting a request to each component, etc.

The functions of an initiator are listed as follows.

· providing a user interface
· finding a function from a component
· generating a graph for a linkage of functions to combine functions
· transmitting a request to a component
· receiving an event from a component

There are a plurality of components in a device. The functions of the components are listed as follows.

· providing a function of each component
· receiving a command from an initiator, and notifying an initiator of an event
· receiving data from other components
· transmitting data to other components
· transmitting/receiving a status

A status refers to a state required by a component to offer a service and represented as an object.

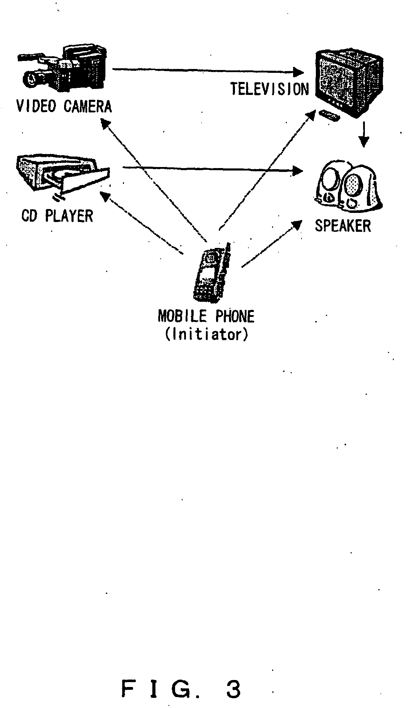

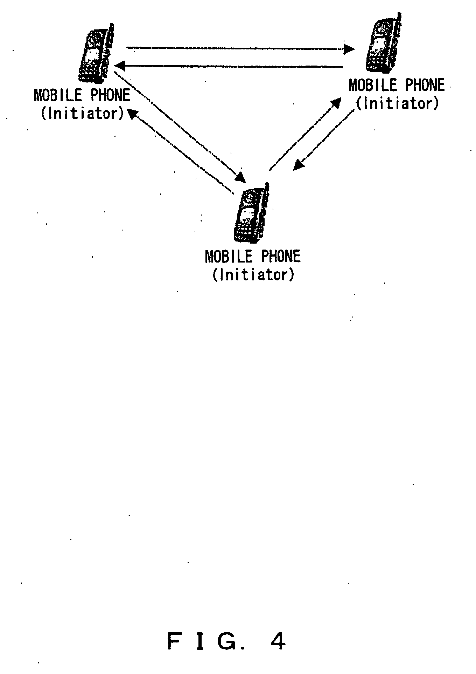

FIGS. 3 and 4 show a practical example of an ad hoc network.

FIG. 3 shows the operation of a product such as a domestic appliance, etc. in a home, a coffee shop, etc. A mobile phone of a user is set as an initiator for operating components such as a video camera, a CD player, a television, a speaker, etc., so that, for example, favorite music can be played back, a favorite television program can be selected, etc. A speaker outputs voice in cooperation with a CD player, a television, etc. A video camera can be used to output images and voice captured by the video camera in cooperation with the television and the speaker.

FIG. 4 shows the communications of information among mobile phones.

As shown in FIG. 4, the mobile phones can communicate with one another without using a base station, and one of the mobile phones functions as an initiator. Any mobile phone can be an initiator if it has the capabilities described later. The mobile phones other than the initiator function as the components offering the respective services. Since there can be a user of a mobile phone who hates to have his or her own mobile phone taken into an ad hoc network, it is desired that a mobile phone can reject offering a service in response to a service request from an initiator.

"Finding a service"

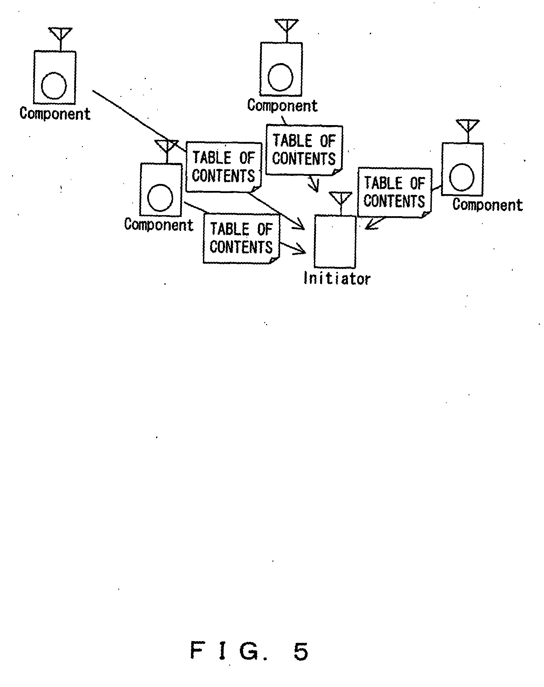

FIG. 5 shows the concept of the initiator checking an available service.

To offer an integrated service in an ad hoc network, the initiator receives a table of contents from each component describing the function which can be offered by each component as shown in FIG. 5. The initiator receives the tables of contents from all components in the ad hoc network.

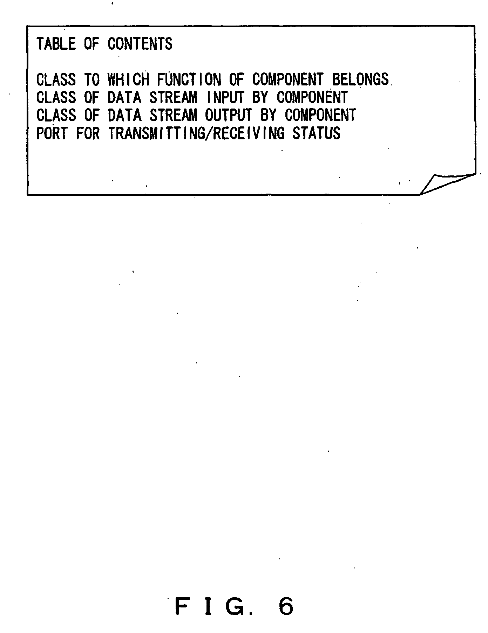

FIG. 6 shows the recording information about a table of contents.

As shown in FIG. 6, a table of contents contains the following information.

· the class of the function which can be offered by the component (class to which the function of the component belongs)
· the class of receivable data (class of the data stream input by the component)
· the class of data which is processed and can be transmitted by the component (class of the data stream output by the component)
· a port through which the component can pass the status to another component, or the component can receive the status from another component (a port for communications of the status)

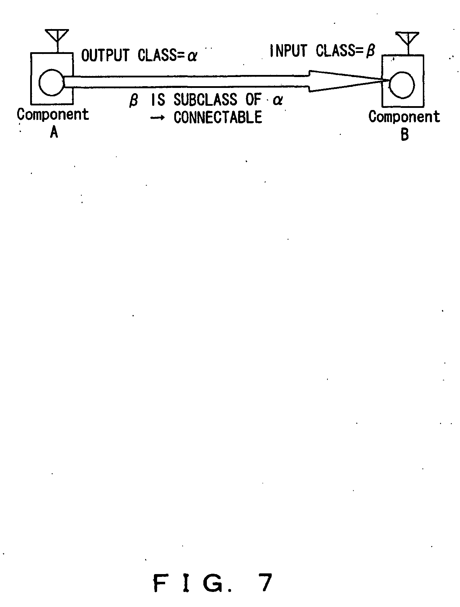

FIG. 7 is an explanatory view of the relationship between the connection between components and the description of the table of contents.

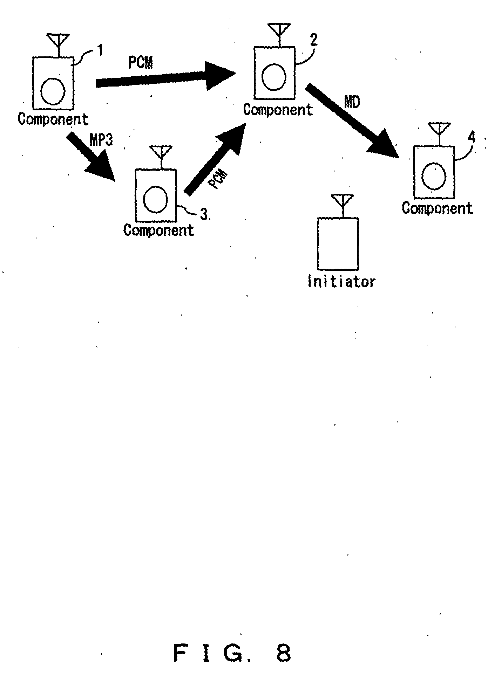

When the class (α for example) of the data which can be transmitted by a component A matches the class (β for example) of the data which can be received by a component B, or α matches β by tracing back the class hierarchy, the initiator assumes that a connection can be made, and marks the information for identification of the component in the initiator as shown in FIG. 7. Thus, by performing the similar process on the components of all devices, a combination of connectable components are extracted, and a connectable branch (connection between components) is generated, thereby generating the graph as shown in FIG. 8. At this time, there occurs a loop in a graph depending on the relationship among the components. If branches are generated and a loop passing the same branch is found, then the branch is deleted to remove the loop.

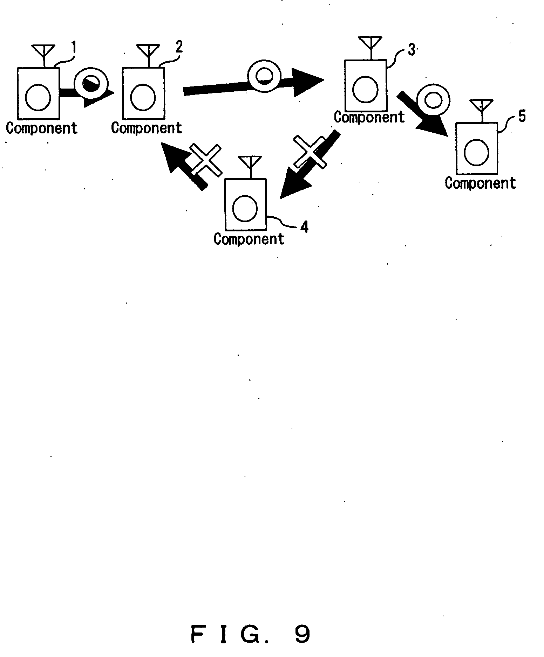

FIGS. 8 and 9 are explanatory views of a graph showing the concept of the connection between the components detected by the initiator.

For example, by referring to FIG. 8, assume that the voice played back by a component 1 is output by a component 4. First, the initiator checks the classes of the services of the components 1 and 2 contained in the table of contents, finds that both the components 1 and 2 can communicate voice through a PCM, and determines that the components 1 and 2 communicate data in the format of the PCM. Similarly, since the components 1 and 3 can communicate data through a MP3, it determines the communications using the MP3. The communications between the components 3 and 2 are performed trough the PCM. At this time, the component 3 is assumed to have the function of converting the MP3 sound source into the PCM sound source, and it is determined that the components 2 and 4 communicate voice data in the MD format.

Thus, for example, the path from the component 1 such as a CD player, etc. to the component 4 such as a speaker, etc. is detected, and the user of the initiator is notified that a CD can be played back. Which path is to be used, from the component 1 to the component 2, or from the component 1 to the component 3, is determined based on the priority in selecting a path as described later.

FIG. 9 is an explanatory view of the concept of detecting and deleting the path which generates a loop when a path is detected.

In FIG. 9, when the path is traced from the component 1 to the components 2 and 3, two possible paths appear at the component 3. That is, there can be paths from the component 3 to the components 4 and 5. The path to the component 5 leads to the component such as a speaker, etc. which ends the path, and there is no problem. However, in the case of the component 4, the destination is the component 2. Therefore, the components 2, 3, and 4 generate an unnecessary loop of path. As a result, when a connection is attempted from the component 4 to the component 2, which already has an assigned branch, the connection is not generated. Furthermore, a branch from the component 3 to the component 4 is also deleted.

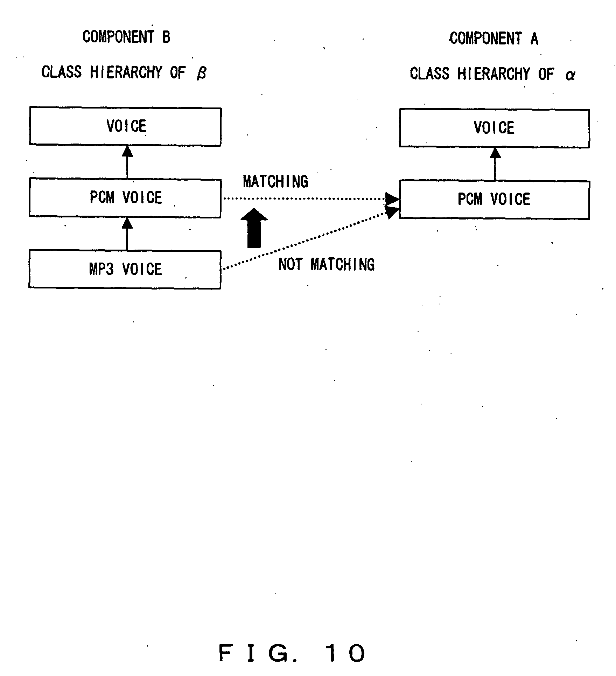

FIG. 10 is an explanatory view of the process of the initiator forming a branch between components.

In the table of contents of the component A, voice is set as a service, and the PCM voice service is set at the lower hierarchical level of the voice class. In the table of contents of the component B, a voice class is set, and the PCM voice and the MP3 voice are set at the lower hierarchical levels in this order as services.

First, the initiator retrieves the "class ($\alpha$) of the data stream to be output" from the table of contents of the component A. The class information contains the information about the class hierarchy. Similarly, the initiator retrieves the "class ($\beta$) of the data stream to be input" from the table of contents of the component B. The class information also contains the information about the class hierarchy.

Then, it determines whether or not the $\beta$ class hierarchy (for example, MP3 voice > PCM voice > voice) matches the $\alpha$ class hierarchy (for example, PCM voice > voice) sequentially from the deepest hierarchical level. In the example shown in FIG. 10, the first class of $\beta$ (MP3 voice) is compared with the $\alpha$ class hierarchy (PCM voice), but they do not match. Then, the second class of $\beta$ (PCM voice) is compared with the $\alpha$ class hierarchy (PCM voice). They match each other. When there is a matching result between the class hierarchies, a branch (connection between the components A and B) is generated.

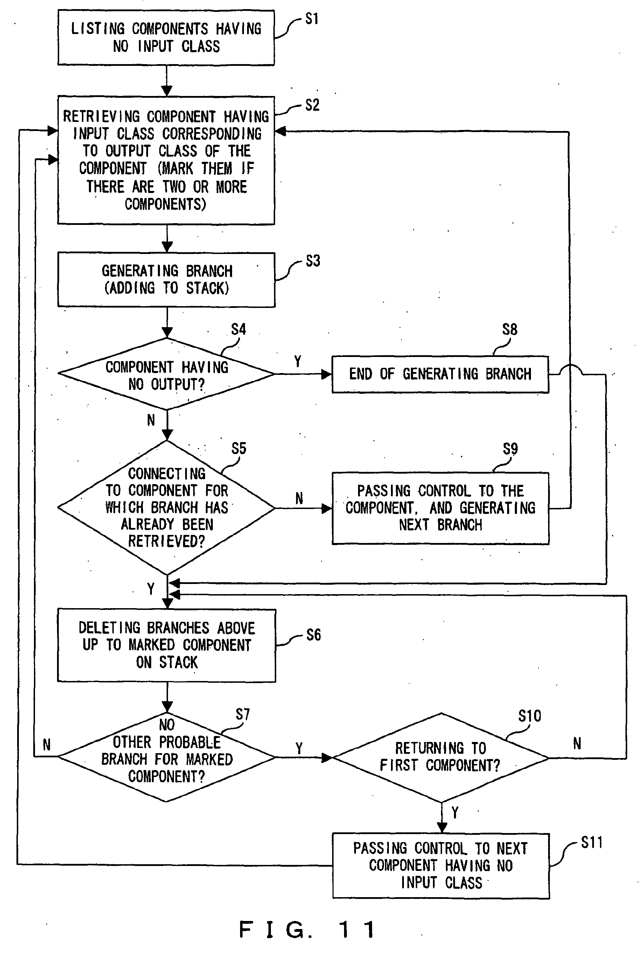

FIG. 11 is a flowchart of generating a graph by an initiator.

First, in step S1, components having no input classes are listed. That is, those having no receivable input data format are listed. Then, a component having an input class corresponding to an output class of the component is searched for. If there are a plurality of corresponding components found, the identification information about a plurality of components is marked. In step S3, a branch is formed in a stack format. In step S4, it is determined whether or not the component to which the branch is connected is a component having no output class. That is, it is determined whether or not it is a component which cannot output communications data in the ad hoc network to another component.

If the determination result in step S4 is YES, it is determined that the generation of a branch is completed in step S8, and control is passed to step S6. If the determination result in step S4 is NO, then it is determined in step S5 whether or not the branch is connected to a component which has already been retrieved.

If the determination result in step S5 is NO, control is passed in step S9 to the component to which the branch is currently connected, and then control is passed to step S2 to generate the next branch. If the determination result in step S5 is YES, then the branches are deleted in step S6 up to the component marked in step S2 in the stack. In step S7, it is determined whether or not the marked component has another probable branch. If the determination result in step S7 is YES, then control is passed to step S10, and it is determined whether or not control has been returned to the first component. If the determination result in step S10 is NO, then another path is not found in the deleted paths. Therefore, control is returned to step S6, and the branch is traced and deleted up to the marked component. If the determination result in step S10 is YES, then control is passed to step S11, control is passed to the next component having no input class, and then returned to step S2. If the determination result in step S7 is NO, control is returned to step S2, and the processes are repeated.

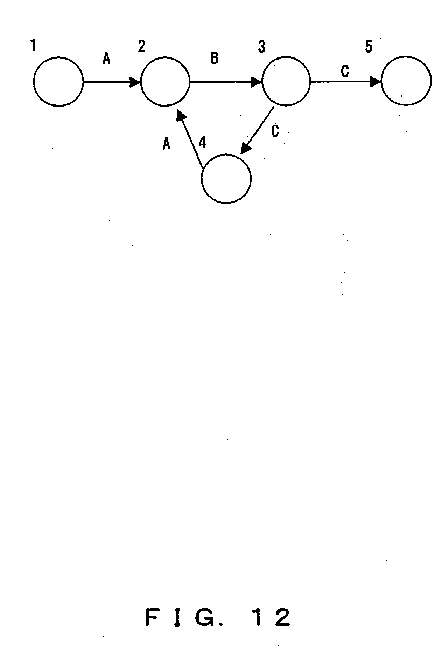

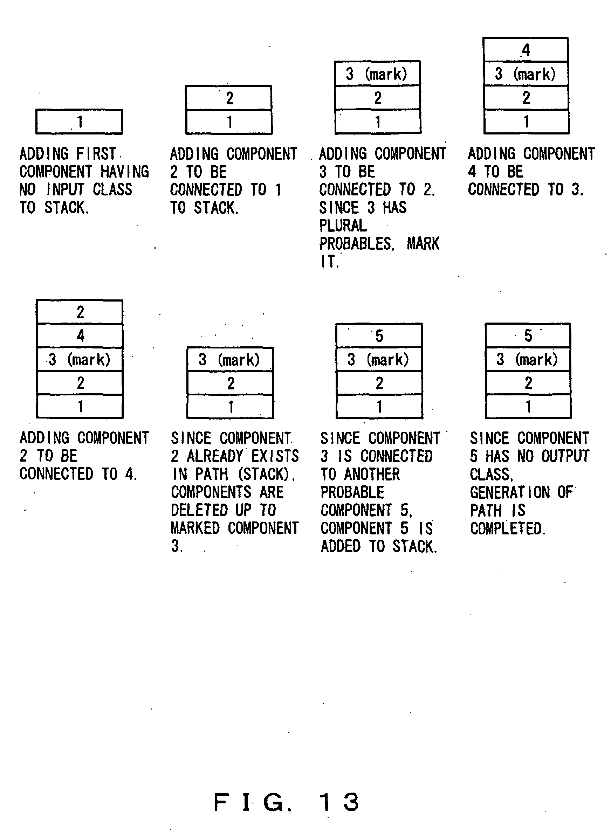

FIGS. 12 and 13 show the process of generating a branch.

The case shown in FIG. 12 is assumed. In this example, the components are assigned the respective reference numerals of 1 through 5, and the relationships between the input/output classes are represented by the characters of the alphabet of A through C. FIG. 13 shows the status of the stack.

First, the first component having no input class is added to the stack. Then, the component 2 connected to the component 1 is added to the stack. Furthermore, the component 3 to be connected to the component 2 is added. Since the component 3 has a plurality of output destinations, it is marked. Then, the component 2 to be connected to the component 4 is added. However, since the component 2 has already been assigned to the path (stack), the components up to the marked component 3 are deleted. Since the component 3 is connected to the component 5 which is another probable output destination, the component 5 is added to the stack. Finally, since the component 5 has no output class, the generation of a path is completed.

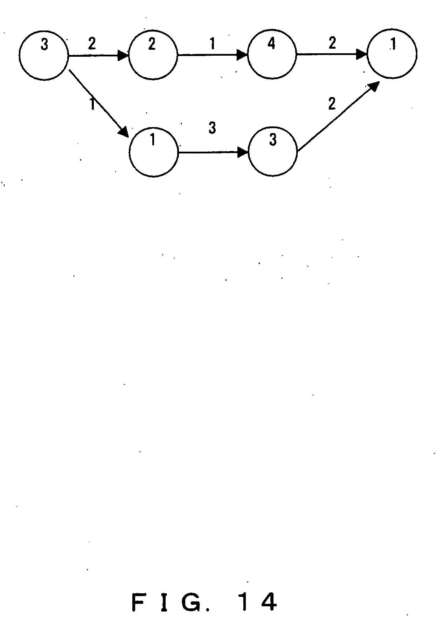

FIG. 14 is an explanatory view of the process of selecting a path with a priority when a plurality of paths (a series of branches and the stack shown in FIG. 13) are detected.

In FIG. 14, a number in a circle refers to the depth in the hierarchy of the components, and a number assigned to an arrow refers to the depth of the hierarchy of branches.

First, the following calculations are performed on all paths.

When the depth of the class hierarchy of the component is $n_i$, and the depth of the class hierarchy of the branch is bi, the following expression holds.

$$\alpha\Sigma 1/b_i + \beta\Sigma 1/n_i \qquad (1)$$

Then, a higher priority is given to a smaller result of the calculation by the expression (1) above. When a similar path is selected before, it is assigned a higher priority. For example, assuming that $\alpha = 1$ and $\beta = 1$ in the example shown in FIG. 14, the upper path is calculated by (1/2 + 1/2 + 1/4 + 1/1) + (1/2 + 1/1 + 1/2) = 4.08 while the lower path is calculated by (1/3 + 1/1 + 1/3 + 1/1) + 1/1 + 1/3 + 1/2) = 4.5. Since the upper path obtains a smaller result, it is assigned a higher priority.

"Providing a service"

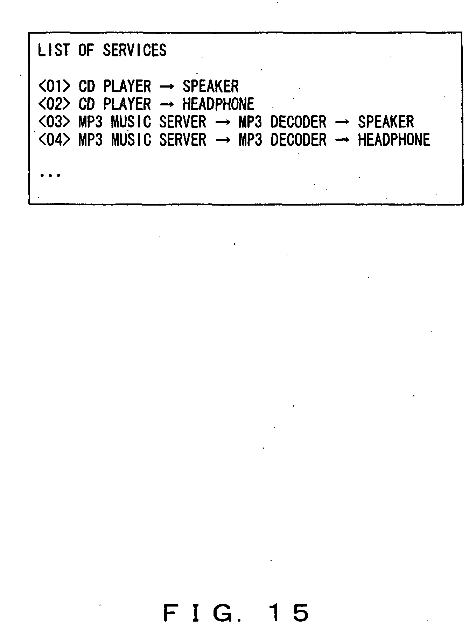

FIG. 15 shows an example of a display of a list of services.

The initiator assigns a higher priority to a heavier weight of component class and input/output data class (having a larger depth in the class hierarchy, and having a larger number of classes) , and to a shorter path length as described by referring to FIG. 14, and presents the paths to the user as the services which can be offered.

Normally, in an ad hoc network, there is a strong possibility that a user personally selects similar services. Therefore, if a user selected a service (path) in the past, the service is assigned a high priority when it is presented to the user, thereby improving the convenience to the user.

A user selects a desired service from among the services presented by the initiator, and indicates it to the initiator. Since the initiator knows what components belong to the selected path, the initiator transmits a request to the components in the path based on the selected services.

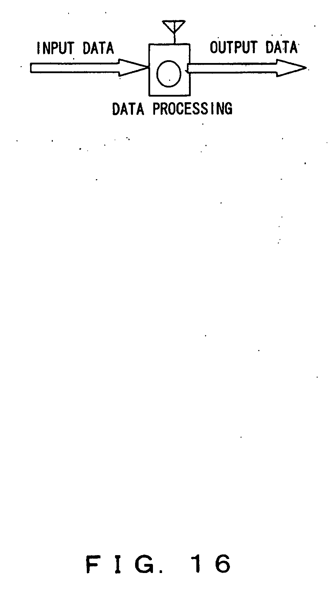

FIG. 16 is an explanatory view of the outline of the operation of a component when a service is provided.

The component which receives a request from the initiator inputs the input data using its function as shown in FIG. 16, processes the data, and outputs it as new output data.

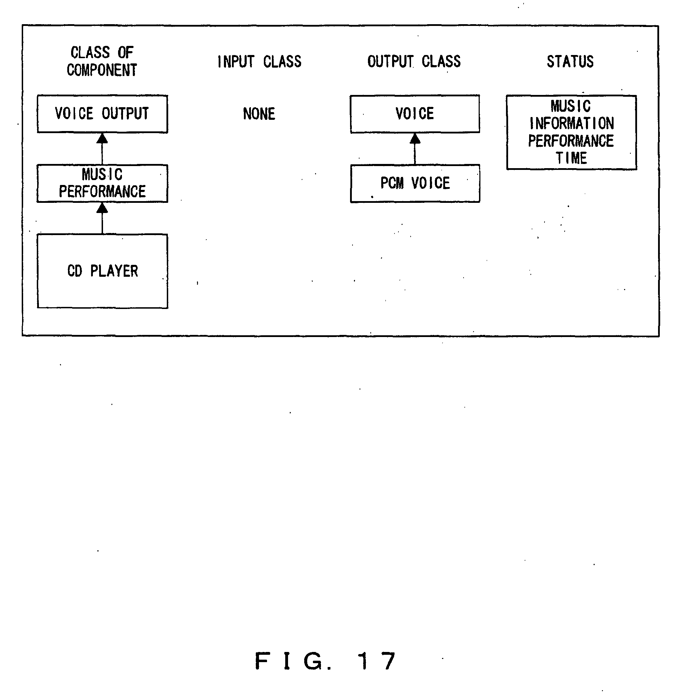

FIG. 17 shows an example of a table of contents received by an initiator from each component before performing the path retrieving process.

The contents of the table depend on the type of component. For example, FIG. 17 shows the case of a CD player. As for the classes of components, the voice output has lower hierarchical levels of music performance and a CD player in this order, and has no input classes. In the output classes, voice is followed by PCM voice. That is, in the ad hoc network, the CD player transmits music played back by the PCM voice. As for the status described later, title information, a performance time, etc. are included.

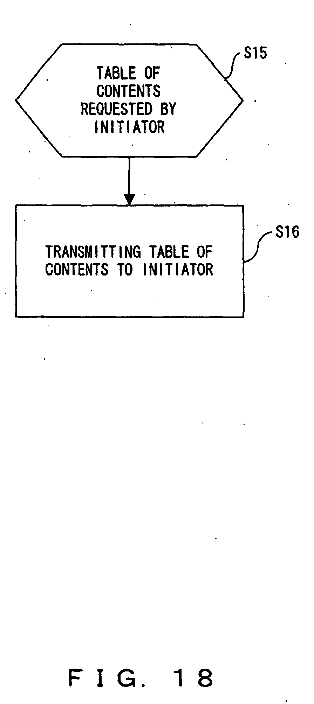

FIG. 18 is a flowchart of the process of transmitting a table of contents from a component to an initiator.

First, in step S15, a component receives a request for a table of contents from the initiator. In step S16, the component transmits the information provided in the component in advance as a table of contents to the initiator.

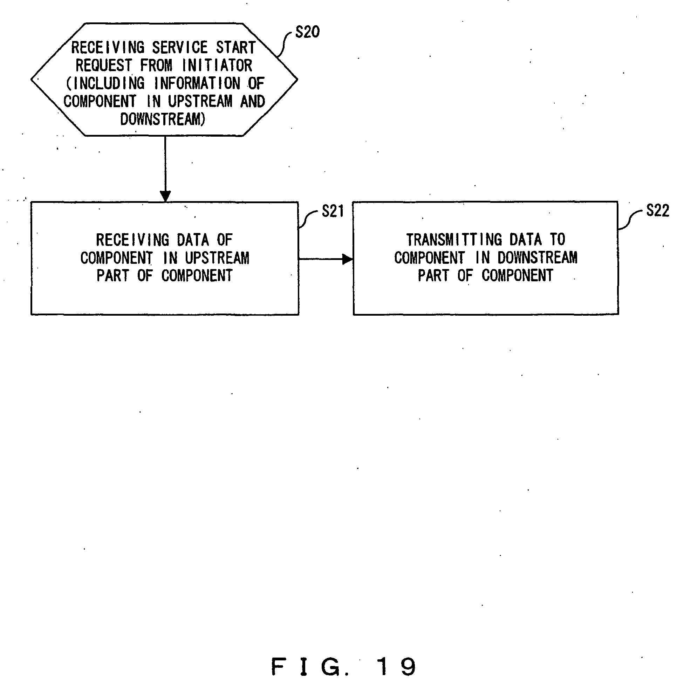

FIG. 19 is a flowchart of the process of starting a service.

First, in step S20, a component receives a service start request from the initiator. At this time, the initiator receives the information including the information about the components in the upstream and downstream. In step S21, the initiator receives the data of the component in the upstream part of the component. In step S22, the initiator transmits data to the component in the downstream part of the component.

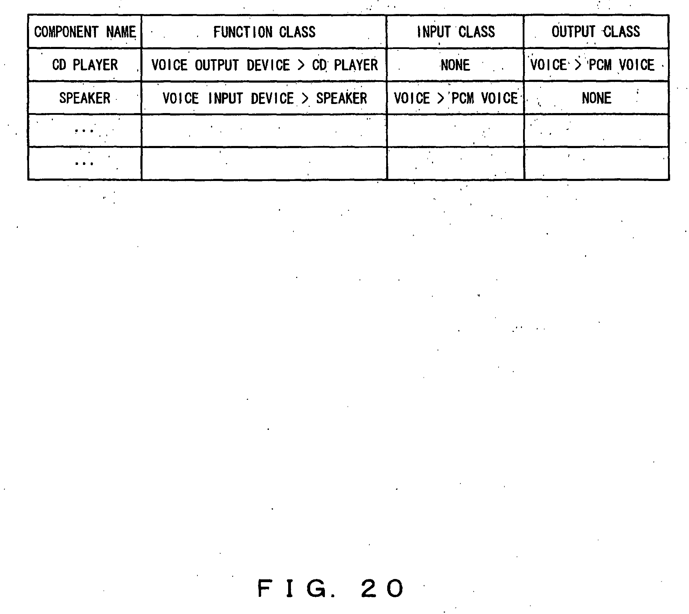

FIG. 20 shows an example of a data format of a graph of an initiator.

As described above, the initiator generates a graph for connection of each component. It is stored as a table of a component name, a function class, an input class, an output class recorded therein as shown in FIG. 20. In the case shown in FIG. 20, the CD player transmits voice through PCM voice, and the speaker receives the PCM voice, and outputs it.

"Transfer of service"

In an ad hoc network, a device is free to enter and quit it. Therefore, a device offering a service can quit the network or a device which can offer a service can newly enter it.

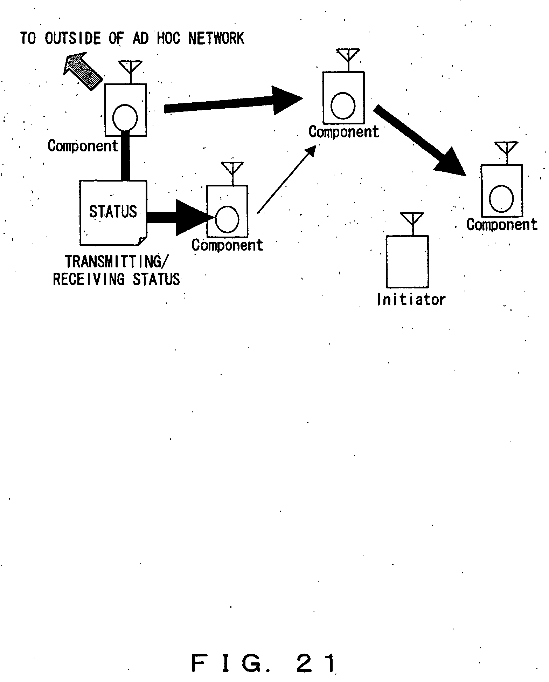

FIGS. 21 through 23 are views showing the concept of the operation of a component quitting and entering an ad hoc network.

As shown in FIG. 21, when a device having a component offering a service quits the ad hoc network, and when there is a component which can be a substitute for the quitting component in the ad hoc network, the quitting component of the device passes an object referred to as a status to the substitute component. The status is an object including necessary information for offering the service. Thus, the service can be continuously provided using the substitute component.

If there are no such component in the network, the component notifies the initiator of quitting the network so that the user can be instructed to select a substitute service.

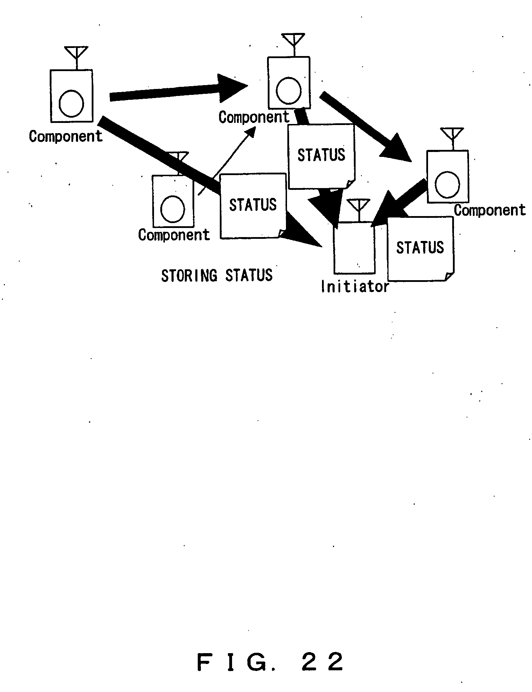

It is also possible to directly transmit the status between components, but it is often not possible in an ad hoc network that a quitting component can give such a notification. Therefore, as shown in FIG. 22, each component periodically passes the status to the initiator. Thus, although a quitting component cannot pass the status to another component, the initiator passes the status as a substitute, thereby easily restoring the service. Also at this time, a user can be instructed to select a substitute service.

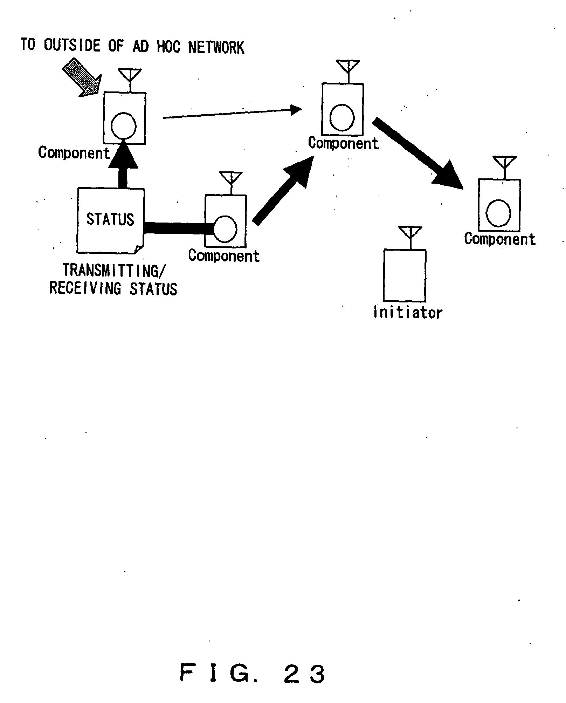

When a new device enters, the component of the device notifies the initiator of a new entry in the ad hoc network. The initiator reconfigures the graph with the current services maintained. If a service having a higher priority than the current device can be provided, the user is notified of a possible change of services. When the user selects a new service, the services are switched. At this time, if the switched-to component can receive the status of the switched-from component, the switched-from component passes the status to the switched-to component as shown in FIG. 23. Although a user can use a new service, it is not always necessary to select the new service.

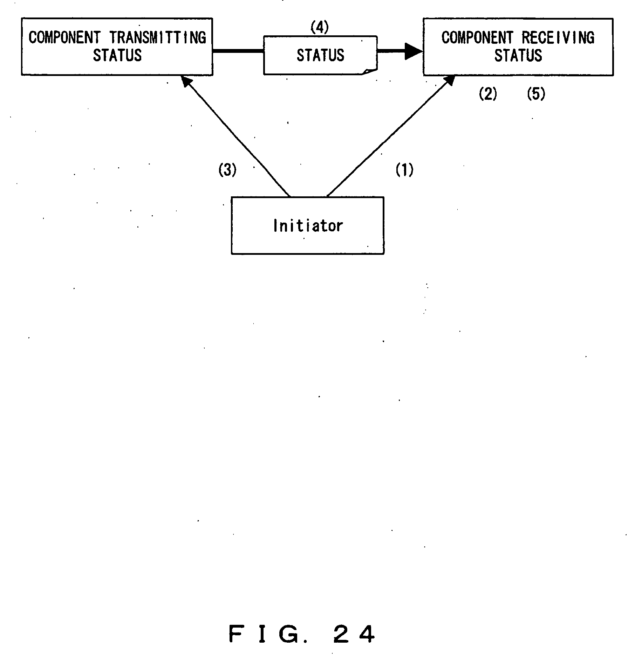

FIG. 24 is an explanatory view of the status transmit/receive process.

First, the initiator issues to a component, which is to receive the status, an instruction to receive the status (1). Then, a component which is to receive the status enters a standby state to receive the status (2). The initiator issues to the component, which is to pass the status, an instruction to pass the status with the address of the component, which is to receive the status (3). The component which is to pass the status transmits the status to the address of the component which is to receive the status (4). Then, upon receipt of the status, the component which is to receive the status makes a necessary change to the current status depending on the received status (5).

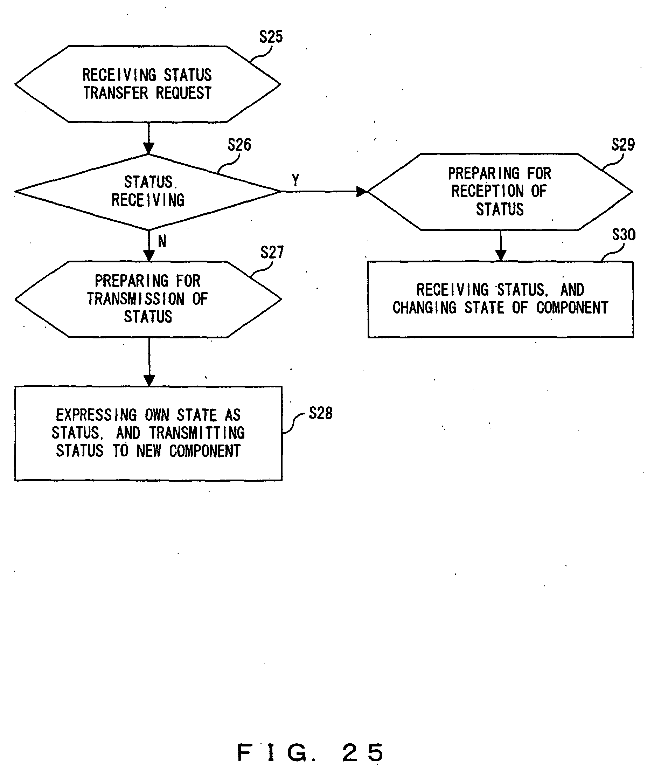

FIG. 25 is a flowchart of the status transfer process.

First, in step S25, a status transfer request is received. In step S26, it is determined whether or not a status reception notification has been received. If the determination result in 'step S26 is YES, then a preparation for reception of the status is made in step S29. In step S30, the status is received, and the status of the component is changed. If the determination result in step S26 is NO, then a preparation for transmission of the status is made in step S27. In step S28, its own status is expressed as the status, and the status is transmitted to the new component.

As the information about the status which depends on the type of component, for example, in the case of a music transmission component such as a CD player, etc., the following information is included.

- title (ID of a music work)
- elapsed time

The following advantages can be obtained by using the component integrating system of an ad hoc network.

- There is a request to use the same service anywhere at any time. For example, when music is requested anywhere, a user can listen to music on a CD player and its speakers. When the user goes out, he or she can also listen to music on a portable MD player or a mobile phone music distribution system and a set of head phones. According to the present embodiment, an ad hoc network can be configured at home by a CD player and its speakers with their operating devices such as a remote controller, a mobile phone, etc. (initiator), thereby offering a service. When a user goes out, the CD player passes the status of a title of a song, an elapsed time, etc. to an MD player or a mobile phone music distribution system while the speakers pass the status of the volume of the music to a set of headphones, thereby realizing a continued service of providing music. At this time, the ad hoc network is configured by an MD player, a mobile phone music distribution system, headphones, a mobile phone, etc., thereby continuously providing a service.

Since an ad hoc network is dynamically configured, it can be applied by cable and by wireless. However, in the present specifications, it is assumed that the devices forming an ad hoc network fundamentally have the wireless communications capabilities for simple explanation. When a device does not have wireless communications capabilities, it is connected to another device having wireless communications capabilities, and an instruction to a device having no wireless communications capabilities is transmitted through a device having wireless communications capabilities.

An initiator only has to manage information, but in the present specifications, a mobile phone, a PDA, a notebook PC, etc. having a user interface can be an initiator. That is, the function of requesting a component of another device to function in accord with a user operation, and the function of notifying a user of an event are required.

In the description below, A mobile phone is described as a typical initiator.

A mobile phone which functions as an initiator configures an ad hoc network with other devices in the vicinity through a wireless link such as IEEE802.11 (wireless LAN), Bluetooth, etc. The devices and the initiator configuring an ad hoc network can communicate information with one another.

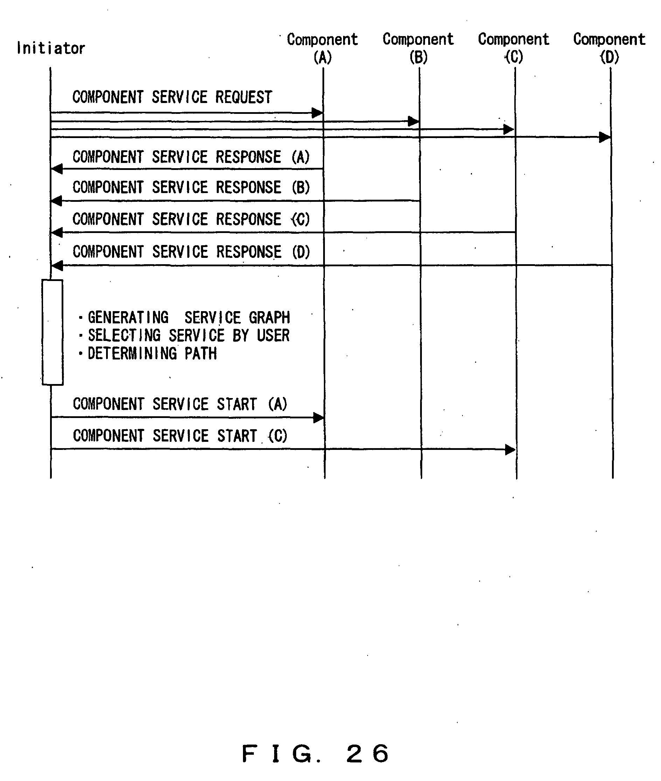

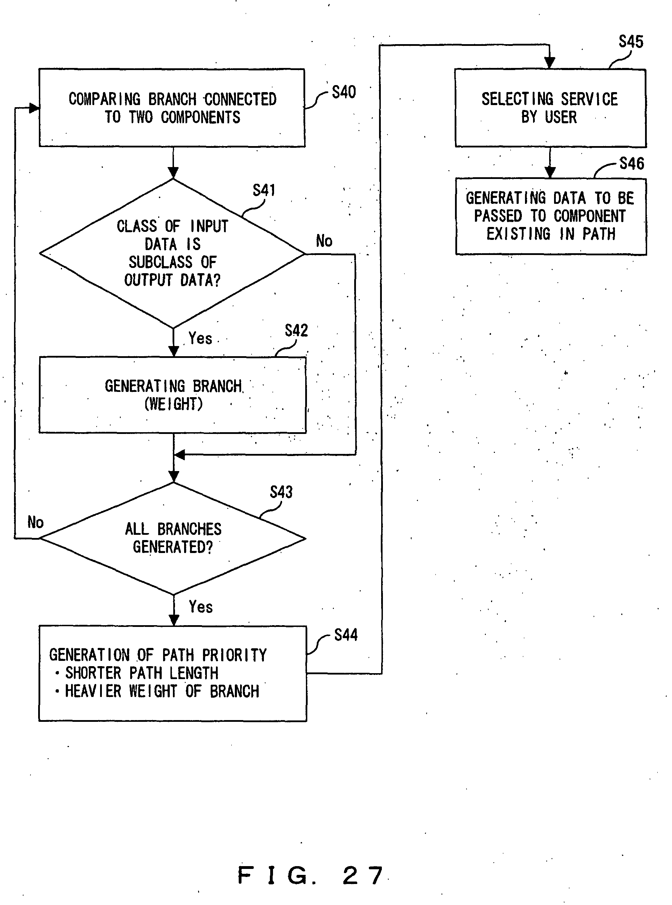

FIG. 26 shows a sequence of the communications of a table of contents between the initiator and the components. FIG. 27 is a flowchart of the process of determining a path and offering a service after an initiator receives a table of contents.

As shown in FIG. 26, the initiator transmits a "component service request" to a component in each device. A component which has received a "component service request" returns a "table of contents" referred to as a "component service response" describing its own function class and an input/output data class to the initiator. Upon receipt of the "component service response" from all devices forming the ad hoc network, the initiator uses the input/output data class described in the table of contents.

As shown in FIG. 27, in step S40, branches connecting two components are compared. In step S41, if the relationship between the output data class and the input data class matches as shown in FIG. 7, the initiator sets a branch of a service class (step S42). If the relationship does not match, no branch is set, and another branch is searched for. When branches are rearranged for all components (step S43), the initiator indicates available services by assigning higher priorities to paths of a branch having a heavier weight of a class hierarchy of input/output classes and a graph having shorter path length (step S44). Then the path of a service specified by a user is determined (step S45), and all components in the path are notified of the "start of a component service" (step S46).

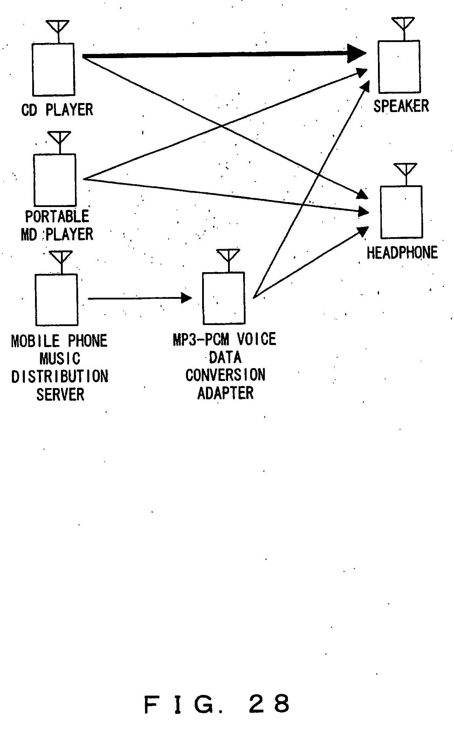

FIG. 28 shows in practice the operation according to an embodiment of the present invention.

As shown in FIG. 28, if there is information that a "CD player" component class outputs "PCM voice" data, and a "speaker" component class inputs "PCM voice" data, then a service graph can be generated by connecting a "CDplayer" component having the input/output "PCM voice" data and a "speaker" component using a branch.

Thus, a service graph is generated by connecting all components in the ad hoc network using a branch. For example, in this case, a service of "a CD player plays back music, and a speaker output the voice" can be configured. When a user selects a service, the initiator issues a "component service start" request to the components in the selected path. Thus, in the case of the example, "a CD player plays back music", and "a speaker outputs voice".

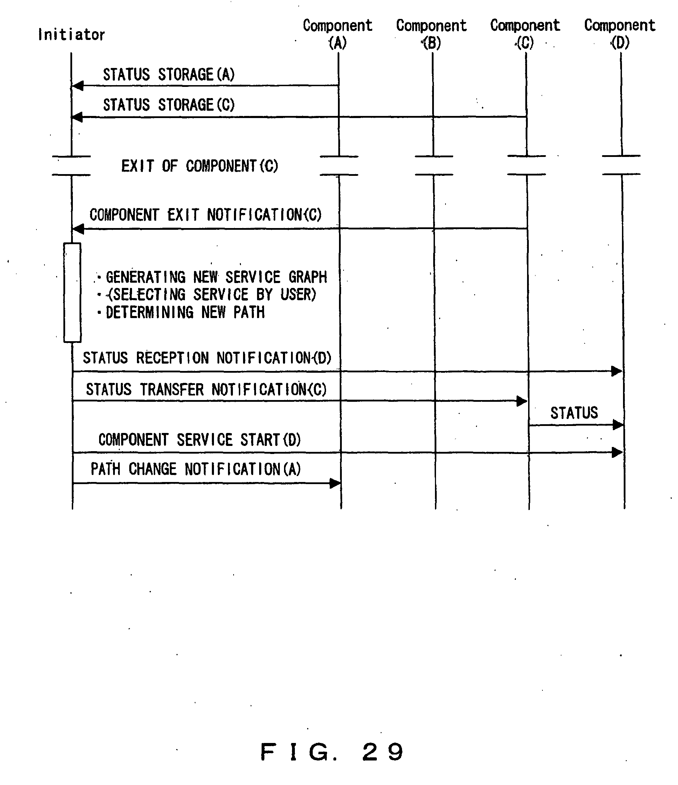

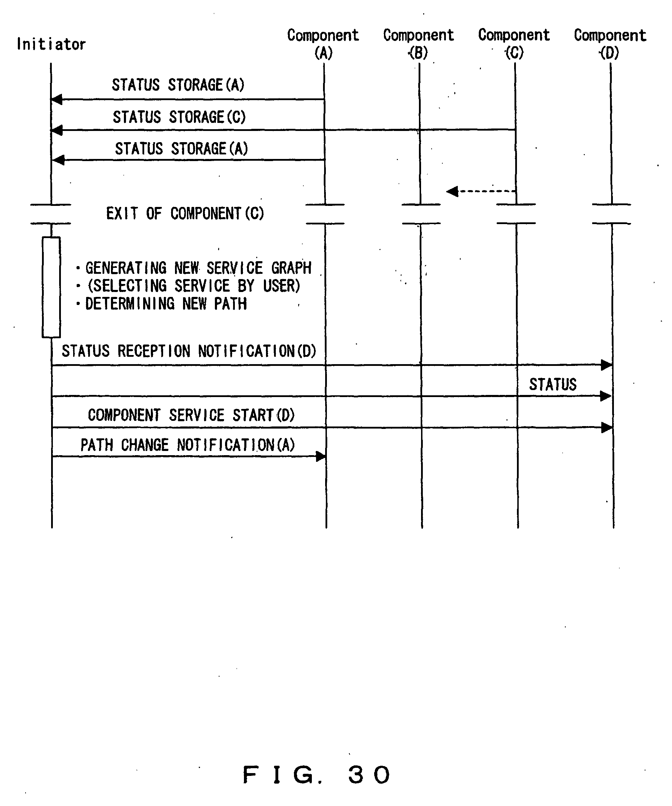

FIGS. 29 through 31 show the operation when the configuration of the ad hoc network is changed.

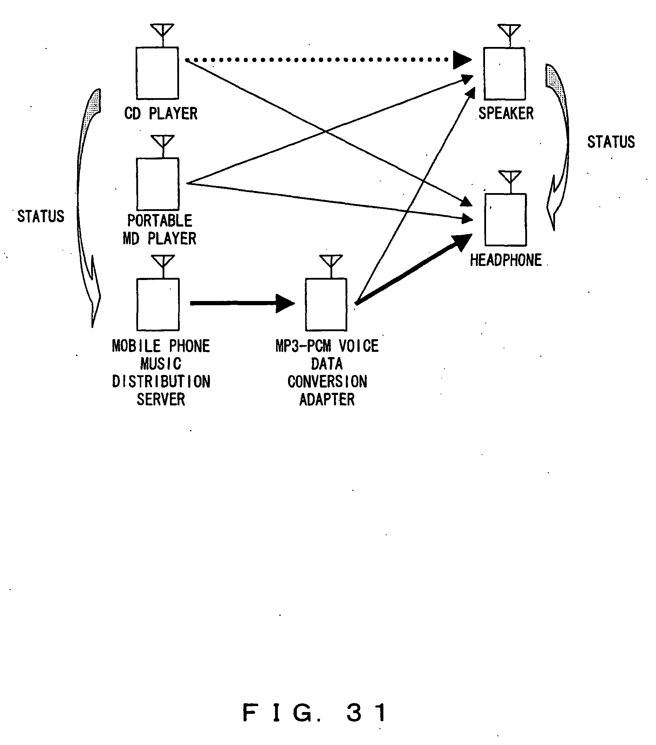

When the configuration of the ad hoc network is changed, the initiator is informed that the ad hoc network has been changed by a component entering or exiting the ad hoc network transmitting to the initiator a "component entry notification" or a "component exit notification" as shown in FIG. 29. Upon receipt of the notification, the initiator issues a "status transfer notification" to the component which has offered the service if the service can be continued. Otherwise, if the component which has transmitted status information has not transmitted the status for a predetermined time period, it determines a timeout, and then assumes that the component has exited the ad hoc network. In this case, when the service can be continued, the initiator issues a "status reception notification" to a new component. Then, the initiator passes the status to the new component. In the paths through which services have been offered, the initiator issues a "component service start" notification to the component which newly enters a path, and issues a "path change notification" to other components. Since it is also possible that a device suddenly exits the ad hoc network, components periodically pass the status to the initiator. If there is a component which can continue the service in case a device suddenly exits the ad hoc network, the initiator issues a "status reception notification" to the component, and passes the status. For example, as shown in FIG. 31, there are a "CD player" component, a "portable MD player" component, and an "MP3-PCM voice data conversion adapter" component as devices having "PCM voice" data output, and a "mobile phone music distribution server" having "MP3 voice" data output. Then, it is considered that there is the case in which a "speaker" component and a "headphone" component are contained as a device having "PCM voice" data input. It is also considered that a path is lost from the "CD player" component having a high priority to the "speaker" component. For example, assume that the state changes from the at-home state to the going-out state. In this case, the "CD player" component and the "speaker" component exit the ad hoc network, and the initiator receives a "component exit notification" from both. At this time, if a component is derived from the same class, the status information can be transferred thereto. That is, the status information such as "music information (title, title ID, etc.)", "elapsed time", etc. can be transmitted from the "CD player" component to a "mobile phone music distribution server" component.

Similarly, the status information such as "music volume information", etc. can be transmitted from the "speaker" component to the "headphone" component. Thus, as shown in FIG. 31, the service configured by the path "CD player" → "speaker" can be transferred without pause to the service configured by the path "mobile phone music distribution server" → "MP3-PCM voice data conversion adapter" → "headphone".

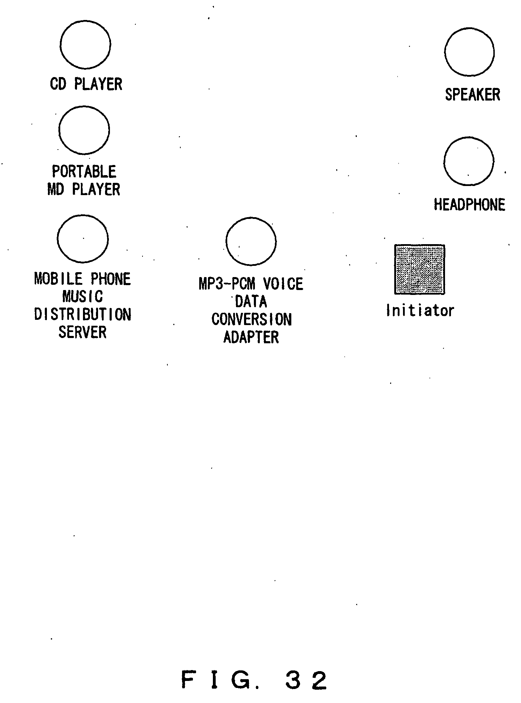

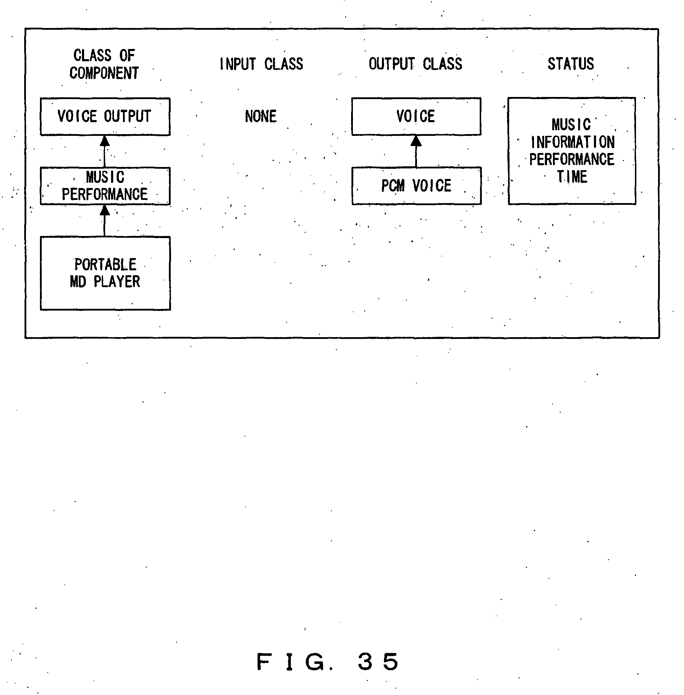

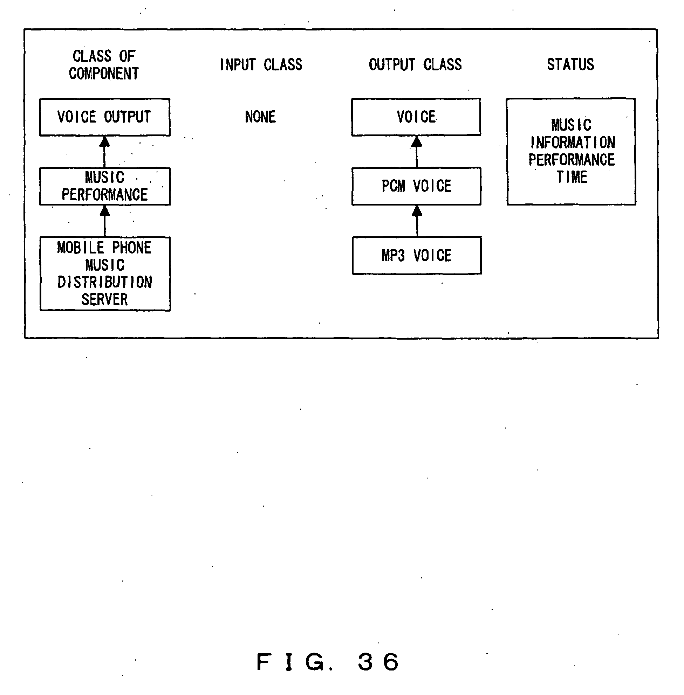

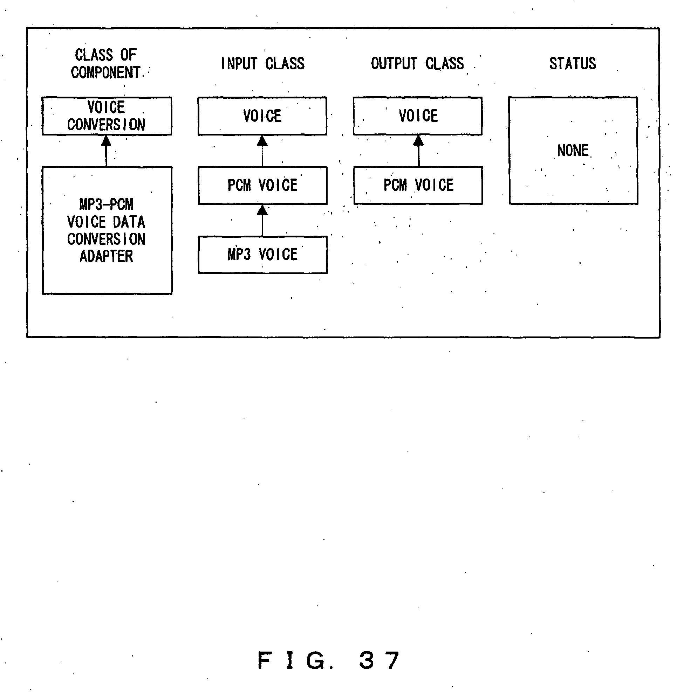

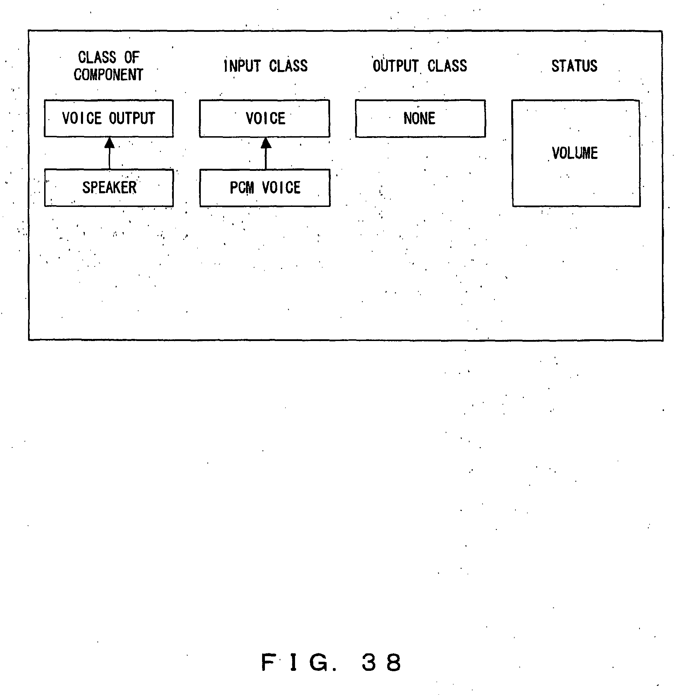

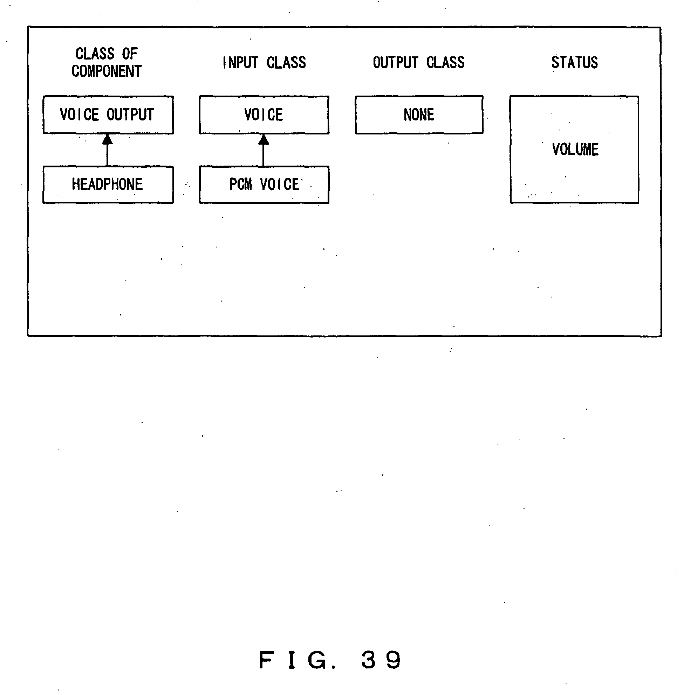

FIGS. 32 through 45 show explanatory views of the practical operation shown in FIGS. 28 and 31.

As shown in FIG. 32, an ad hoc network comprises a CD player, a portable MD player, a mobile phone music distribution server, an MP3-PCM voice data conversion adapter, a speaker, and a set of headphones as components, and an initiator.

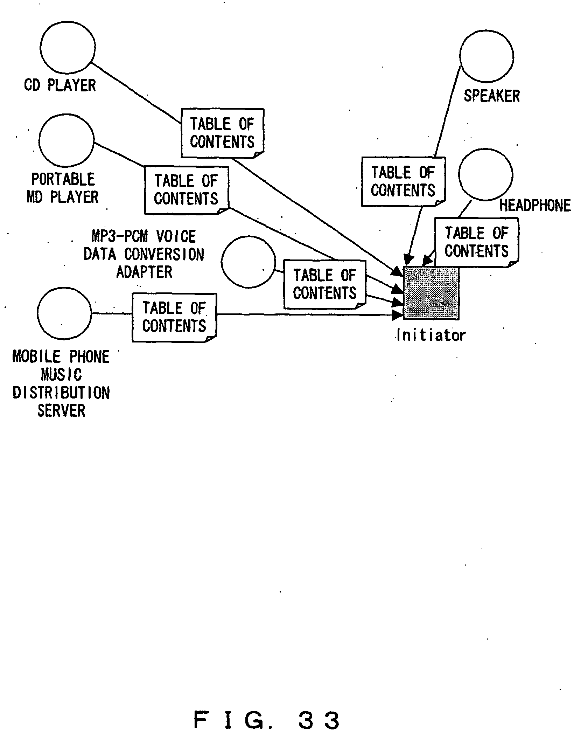

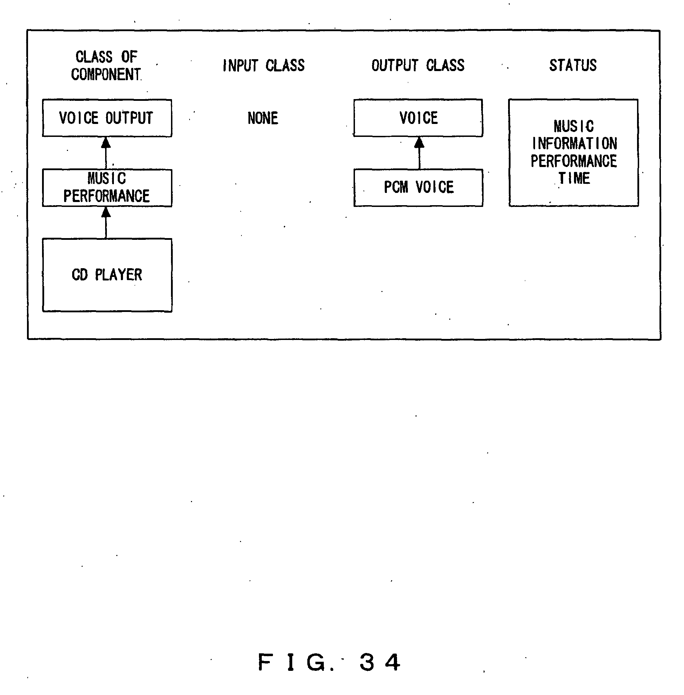

As shown in FIG. 33, the initiator requests each component to transmit a table of contents before offering the first service. FIGS. 34 through 39 show examples of tables of contents a CD player, a portable MD player, a mobile phone music distribution server, an MP3-PCM voice data conversion adapter, a speaker, and a headphone.

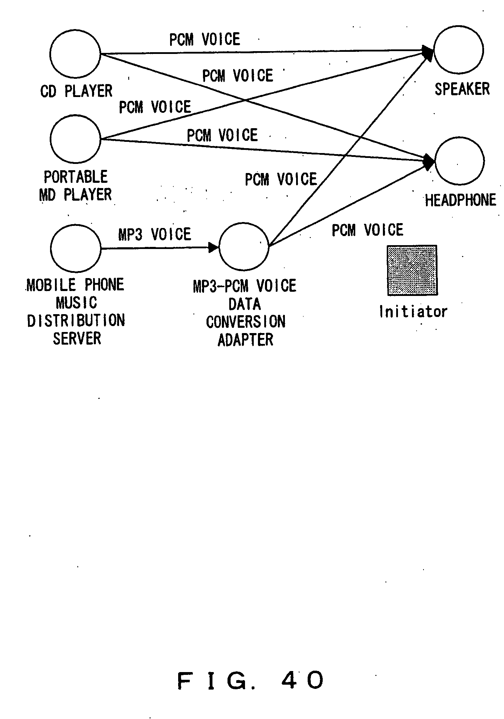

The initiator generates a graph as shown in FIG. 40 according to the tables of contents. For example, since a CD player is a component having no input class, the search starts therefrom. As for the next MP3-PCM voice data conversion adapter, a corresponding class of MP3 voice cannot be detected by tracing up to the class of the PCM voice which is an output class of the CD player. Therefore, no branch can be generated from the CD player to the MP3-PCM voice data conversion adapter. The next speaker is a component having no output class. Therefore, the search is completed there, thereby generating a path.

The priority is assigned to each path. In this step, it is assumed that $\alpha = 1$, and $\beta = 2$ in the expression (1). The depth of the class hierarchy is shown in FIG. 10.

CD player → speaker

priority weight = 1 × (1/3 + 1/2) + 2 × (1/2)

= 1.83

CD player → headphone

priority weight = 1 × (1/3 + 1/2) + 2 × (1/2)

= 1.83

MD player → speaker

priority weight = 1 × (1/3 + 1/2) + 2 × (1/2)

= 1.83

MD player → headphone

priority weight = 1 × (1/3 + 1/2) + 2 × (1/2)

= 1.83

mobile phone music distribution service → MP3-PCM voice data conversion adapter → speaker

priority weight = 1 × (1/3 + 1/2 + 1/2) + 2 ×

(1/3 + 1/2) = 3.00

mobile phone music distribution service → MP3-PCM voice data conversion adapter → headphone

priority weight = 1 × (1/3 + 1/2 + 1/2) + 2 ×

(1/3 + 1/2) = 3.00

Relating to the path (CD player → speaker → mobile phone music distribution service → MP3-PCM voice data conversion adapter → headphone) ever selected before, the priority weight of -1 is assigned, and the entire priority weights are listed as follows.

CD player → speaker
priority weight = 0.83
CD player → headphone
priority weight = 1.83
MD player → speaker
priority weight = 1.83
MD player → headphone
priority weight = 1.83
mobile phone music distribution service → MP3-PCM
voice data conversion adapter → speaker
priority weight = 3.00
mobile phone music distribution service → MP3-PCM
voice data conversion adapter → headphone
priority weight = 2.00

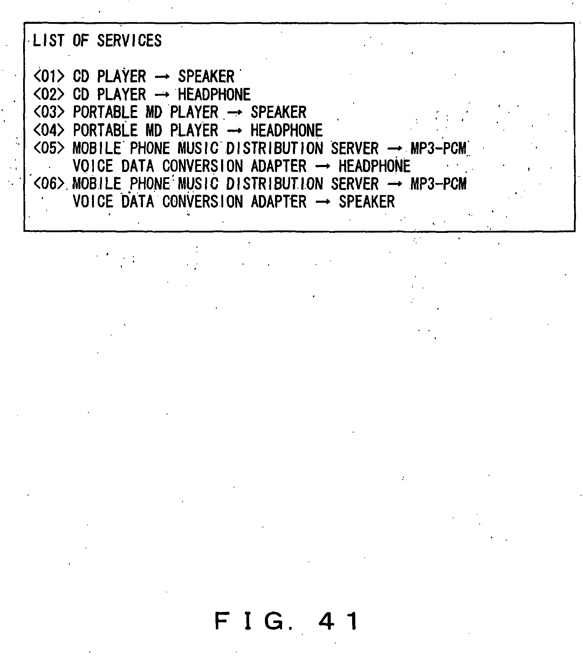

When a higher priority is assigned to a smaller priority weight, the list of services as shown in FIG. 41 can be obtained.

In FIG. 41, when a user selects <01> CD player → speaker, the initiator notifies the CD player and the speaker of the "component service start", thereby starting the service.

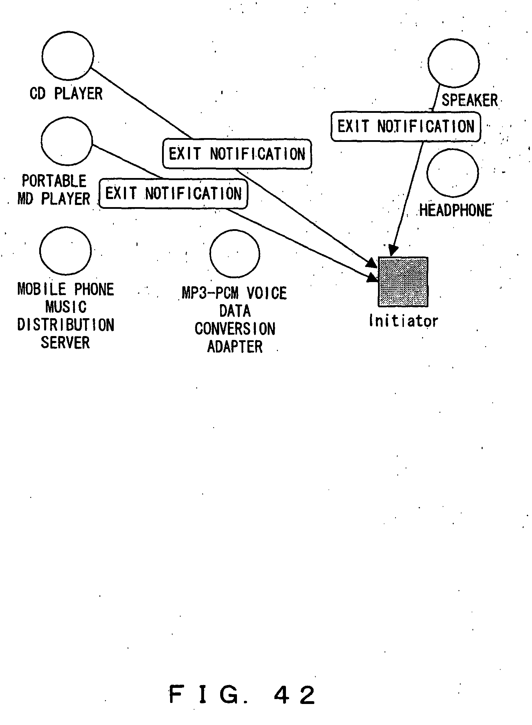

FIGS. 42 through 45 are explanatory view of the transfer of the status shown in FIG. 31.

In this example, assume that the CD player, the portable MD player, and the speaker exit the ad hoc network.

The initiator receives a component exit notification from the CD player, the portable MD player, and the speaker (FIG. 42).

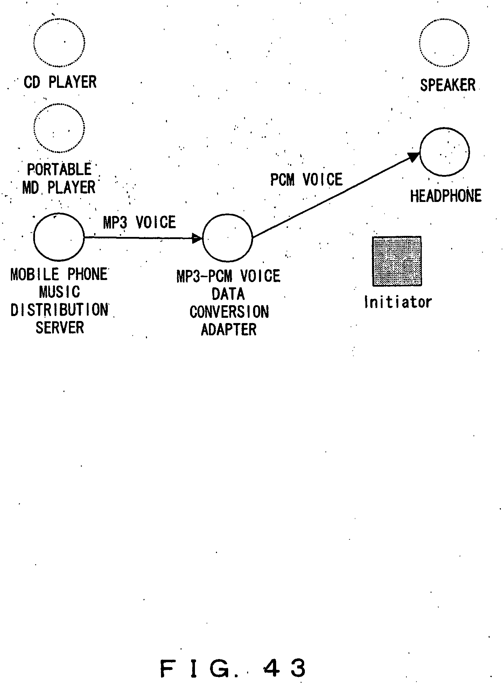

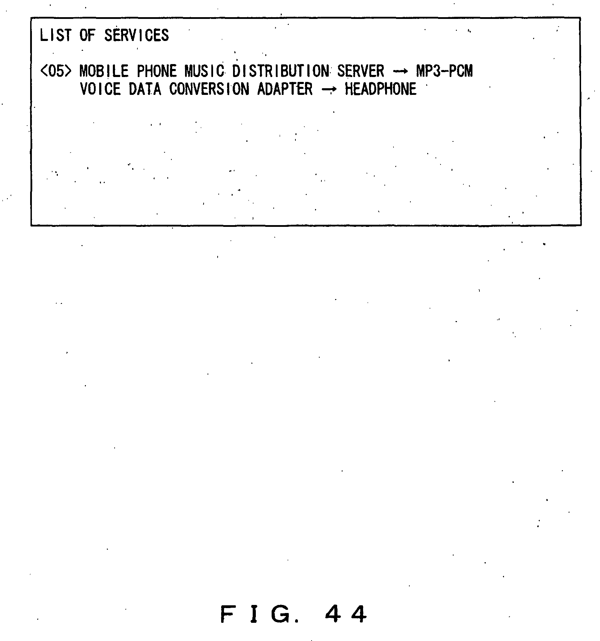

At this time, since the initiator knows that the CD player and the speaker exist in the path through which the current service is offered, it is necessary to generate a new path. Since there are only three components this time, it is clear by comparison of the class hierarchies according to the obtained table of contents that the mobile phone music distribution server can be connected only to the MP3-PCM voice data conversion adapter through MP3 voice, and the MP3-PCM voice data conversion adapter can be connected only to the headphone through PCM voice (FIG. 43). At this time, the list of services are as shown in FIG. 44.

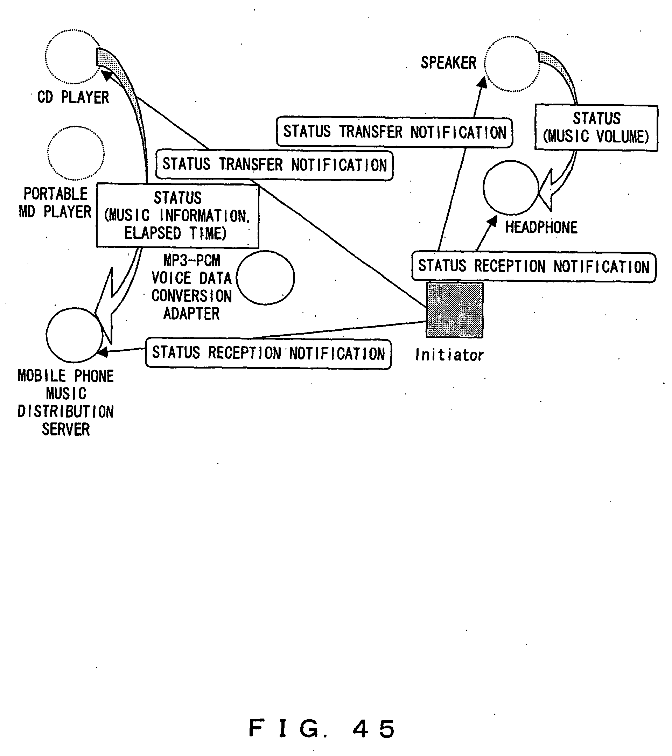

The status (music information, elapsed time) can be passed from the CD player to the mobile phone music distribution server derived from the same class as the CD player. Similarly, the status (music volume) can be passed from the speaker to the headphone derived from the same class as the speaker. The procedure is specified by the initiator (FIG. 45).

As described above, according to the embodiment of the present invention, one service can be provided by combining a plurality of components having the respective functions as shown in FIG. 28 for the playback of a music performance. Furthermore, the service can be continuously offered by transferring the status information as shown in FIG. 31.

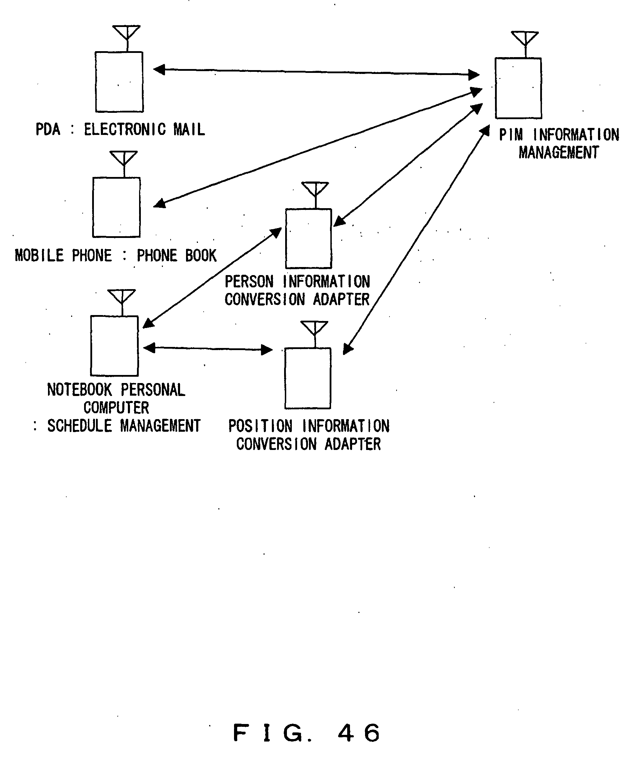

FIG. 46 shows an example of applying the present embodiment to a PIM information management system.

In the latest technology, a device has a plurality of functions. For example, devices such as a mobile phone, a PDA, a notebook PC, etc. have an address book and a schedule note. However, they are overlapping functions, and have to be synchronized. Therefore, it is necessary to manually rewrite them, and to prepare a plurality of synchronizing mechanisms for automatic synchronization. According to the present embodiment, only one PIM component is required, and a component using the PIM component only has to comprise an interface for reading/writing the PIM.

By preparing one component having PIM, double data management can be avoided. As shown in FIG. 46, one "PIM information management" component can maintain the consistence of the data. The "electronic mail" component of the PDA inquires of the "PIM information management" component about the destination.

The "phone book" component of the mobile phone inquires of the "PIM information management" component about the telephone number of the destination. The "schedule note" component of the notebook PC inquires of the "PIM information management" component through the "position information conversion adapter" and "person information conversion adapter" about the meeting place and meeting members when it is necessary to meet somebody according to a schedule. Thus, the information management can be centrally performed, thereby removing the trouble of managing plural pieces of information as in the conventional technology.

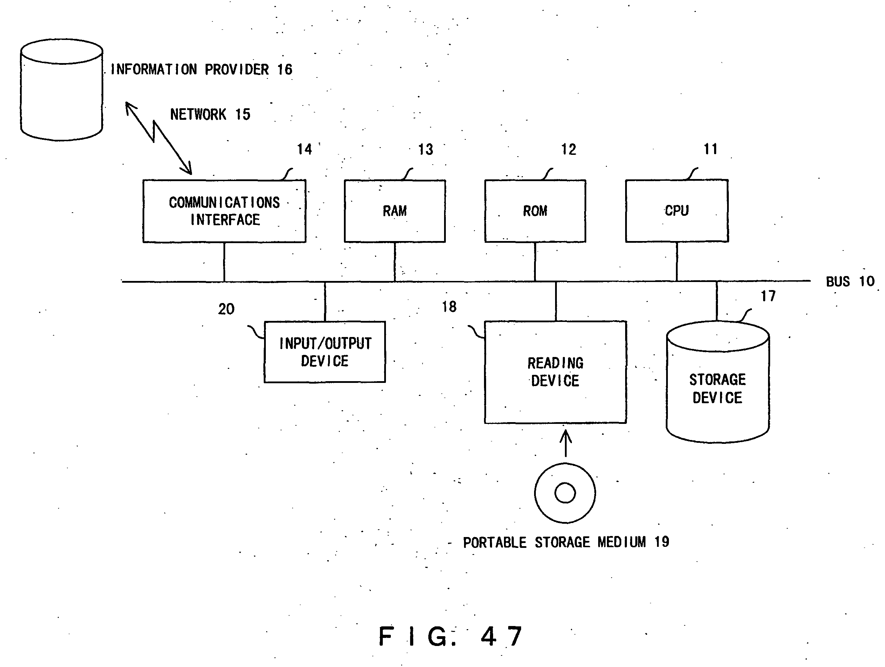

FIG. 47 is an explanatory view of the hardware environment requested when the function of the device including the initiator and the components according to an embodiment of the present invention is realized by a program.

A CPU 11 connected to a bus 10 copies the program stored in a bus 10 such as a hard disk or a portable storage medium 19 such as a floppy disk, CD-ROM, a DVD, an MO through the bus 10 (through a reading device 18 and the bus 10 when the portable storage medium 19 is used) to the RAM 13, and executes the program.

ROM 12 stores a basic program such as BIOS, etc. to allow the CPU 11 to input an instruction from a user through an input/output device 20 such as a keyboard, a mouse, a template, a display, etc., and output a calculation result. Furthermore, it also enables the reading device 18, the storage device 17, etc. to perform control. In addition, the program can be stored in the ROM 12 in using the information device shown in FIG. 47 as an exclusive unit for a device having the initiator and components according to the embodiments of the present invention.

A communications interface 14 communicates with an information provider 16 through a communications interface 14, downloads the program, and allows the CPU 11 to execute the program, or allows it to execute the program under a network environment.

**Industrial Applicability**

According to the present invention, it is not necessary to prepare devices having a number of overlapping functions, but complicated services can be provided by combining a number of components each having a single function. Furthermore, since status information can be transferred, continuous services can be provided for a user.

**Claims**

1. An information terminal connected by cable or by wireless to one or more devices forming a network by cable or by wireless for offering a predetermined service by integrating functions of one or more devices, comprising:

   an information collection unit receiving, from each device, information about services which can be offered by a component which belongs to the one or more devices and performs a predetermined function;
   a service detection unit detecting services which can be offered by combining the one or more devices according to the collected information; and
   a service instruction unit instructing a device included in providing the services to provide a service based on the detected service.

2. The information terminal according to claim 1, wherein
   said collected information is obtained by defining input/output specifications of a component for realizing a function of each device as a class.

3. The information terminal according to claim 2, wherein
   a priority is assigned based on a depth of a hierarchy of the class for a plurality of paths connecting devices contained in services which can be provided and detected by said service detection unit.

4. The information terminal according to claim 2, wherein

a higher priority is assigned to a path of a service used before for a plurality of paths connecting devices contained in services which can be provided and detected by said service detection unit.

5. The information device according to claim 1, wherein

when a device exits the network, a service can be continuously provided using another device which can provide an equivalent of a function of the device.

6. The information device according to claim 1, wherein

when a device enters the network, a service which can be provided by the device is detected, and when there are a plurality of combinations of devices which can provide equivalent services, one is selected for providing a service.

7. The information device according to claim 5 or 6, wherein

when the device exits and enters the network, the device or a substitute device for the device is notified of necessary information for the device continuing a service as status information.

8. The information device according to claim 1, wherein

said one or more devices periodically transmit status information indicating an operation state of the device to the information device then a service is provided.

9. The information device according to claim 8, wherein

said status information is used as information for allowing a service to be continuously provided when a device enters/exits the network.

10. The information device according to claim 1, wherein

said service is a music playback service.

11. The information device according to claim 1, wherein

said device contains a device for managing an address of a PIM, etc. and schedule data, and said service is to manage the address and the schedule.

12. A device for use in a network over which a plurality of devices are connected and predetermined services are provided, comprising:

a communications unit communicating with other devices;
a unit transmitting a table of contents describing a function of the device at a request; and
a function providing unit providing a predetermined function at an instruction.

13. The device according to claim 12, wherein

said function providing unit converts a data format.

14. The device according to claim 12, wherein

a state of the device in providing a service can be transmitted to another device.

15. A processing method for receiving a predetermined service by integrating functions of one or more devices forming a network by cable or by wireless, comprising:

receiving, from each device, information about services which can be offered by a component which belongs to the one or more devices and performs a predetermined function;
detecting services which can be offered by combining the one or more devices according to the collected information; and
instructing a device included in providing the services to provide a service based on the detected service.

16. An information device-readable storage medium storing a program used to direct an information device to realize a processing method for receiving a predetermined service by integrating functions of one or more devices forming a network by cable or by wireless, comprising:

receiving, from each device, information about services which can be offered by a component which belongs to the one or more devices and performs a predetermined function;
detecting services which can be offered by combining the one or more devices according to the collected information; and
instructing a device included in providing the services to provide a service based on the detected service.

17. A program used to direct an information device to realize a processing method for receiving a predetermined service by integrating functions of one or more devices forming a network by cable or by wireless, comprising:

receiving, from each device, information about services which can be offered by a component which belongs to the one or more devices and performs a predetermined function;

detecting services which can be offered by combining the one or more devices according to the collected information; and

instructing a device included in providing the services to provide a service based on the detected service.

F I G. 1

F I G. 2

FIG. 3

FIG. 4

F I G. 5

TABLE OF CONTENTS

CLASS TO WHICH FUNCTION OF COMPONENT BELONGS
CLASS OF DATA STREAM INPUT BY COMPONENT
CLASS OF DATA STREAM OUTPUT BY COMPONENT
PORT FOR TRANSMITTING/RECEIVING STATUS

F I G. 6

OUTPUT CLASS=$\alpha$        INPUT CLASS=$\beta$

Component
A

$\beta$ IS SUBCLASS OF $\alpha$
→ CONNECTABLE

Component
B

F I G.  7

F I G. 8

F I G. 9

COMPONENT B

CLASS HIERARCHY OF $\beta$

COMPONENT A

CLASS HIERARCHY OF $\alpha$

F I G. 1 0

EP 1 435 752 A1

S1 — LISTING COMPONENTS HAVING NO INPUT CLASS

S2 — RETRIEVING COMPONENT HAVING INPUT CLASS CORRESPONDING TO OUTPUT CLASS OF THE COMPONENT (MARK THEM IF THERE ARE TWO OR MORE COMPONENTS)

S3 — GENERATING BRANCH (ADDING TO STACK)

S4 — COMPONENT HAVING NO OUTPUT?

Y → S8 — END OF GENERATING BRANCH

N

S5 — CONNECTING TO COMPONENT FOR WHICH BRANCH HAS ALREADY BEEN RETRIEVED?

N → S9 — PASSING CONTROL TO THE COMPONENT, AND GENERATING NEXT BRANCH

Y

S6 — DELETING BRANCHES ABOVE UP TO MARKED COMPONENT ON STACK

S7 — NO OTHER PROBABLE BRANCH FOR MARKED COMPONENT?

N

Y → S10 — RETURNING TO FIRST COMPONENT?

N

Y

S11 — PASSING CONTROL TO NEXT COMPONENT HAVING NO INPUT CLASS

F I G . 1 1

23

# F I G. 1 2

| 1 |
|---|

ADDING FIRST
COMPONENT HAVING
NO INPUT CLASS
TO STACK.

| 2 |
|---|
| 1 |

ADDING COMPONENT
2 TO BE
CONNECTED TO 1
TO STACK.

| 3 (mark) |
|---|
| 2 |
| 1 |

ADDING COMPONENT
3 TO BE
CONNECTED TO 2.
SINCE 3 HAS
PLURAL
PROBABLES, MARK
IT.

| 4 |
|---|
| 3 (mark) |
| 2 |
| 1 |

ADDING COMPONENT
4 TO BE
CONNECTED TO 3.

| 2 |
|---|
| 4 |
| 3 (mark) |
| 2 |
| 1 |

ADDING COMPONENT
2 TO BE
CONNECTED TO 4.

| 3 (mark) |
|---|
| 2 |
| 1 |

SINCE COMPONENT
2 ALREADY EXISTS
IN PATH (STACK),
COMPONENTS ARE
DELETED UP TO
MARKED COMPONENT
3.

| 5 |
|---|
| 3 (mark) |
| 2 |
| 1 |

SINCE COMPONENT
3 IS CONNECTED
TO ANOTHER
PROBABLE
COMPONENT 5,
COMPONENT 5 IS
ADDED TO STACK.

| 5 |
|---|
| 3 (mark) |
| 2 |
| 1 |

SINCE COMPONENT
5 HAS NO OUTPUT
CLASS,
GENERATION OF
PATH IS
COMPLETED.

# F I G.  1 3

F I G. 1 4

```
LIST OF SERVICES

<01> CD PLAYER → SPEAKER
<02> CD PLAYER → HEADPHONE
<03> MP3 MUSIC SERVER → MP3 DECODER → SPEAKER
<04> MP3 MUSIC SERVER → MP3 DECODER → HEADPHONE

...
```

F I G.  1 5

INPUT DATA        OUTPUT DATA

DATA PROCESSING

F I G.  1 6

| CLASS OF COMPONENT | INPUT CLASS | OUTPUT CLASS | STATUS |
|---|---|---|---|
| VOICE OUTPUT | NONE | VOICE | MUSIC INFORMATION PERFORMANCE TIME |
| ↑ MUSIC PERFORMANCE | | ↑ PCM VOICE | |
| ↑ CD PLAYER | | | |

F I G. 1 7

TABLE OF
CONTENTS
REQUESTED BY
INITIATOR — S15

TRANSMITTING TABLE OF
CONTENTS TO INITIATOR — S16

F I G.　1 8

RECEIVING SERVICE START
REQUEST FROM INITIATOR
(INCLUDING INFORMATION OF
COMPONENT IN UPSTREAM AND
DOWNSTREAM)
S20

RECEIVING DATA OF
COMPONENT IN UPSTREAM
PART OF COMPONENT
S21

TRANSMITTING DATA TO
COMPONENT IN DOWNSTREAM
PART OF COMPONENT
S22

F I G.  1 9

| COMPONENT NAME | FUNCTION CLASS | INPUT CLASS | OUTPUT CLASS |
|---|---|---|---|
| CD PLAYER | VOICE OUTPUT DEVICE > CD PLAYER | NONE | VOICE > PCM VOICE |
| SPEAKER | VOICE INPUT DEVICE > SPEAKER | VOICE > PCM VOICE | NONE |
| ... | | | |
| ... | | | |

FIG. 20

TO OUTSIDE OF AD HOC NETWORK

Component

STATUS

Component

TRANSMITTING/
RECEIVING STATUS

Component

Component

Initiator

F I G. 2 1

STORING STATUS

Initiator

F I G. 2 2

TO OUTSIDE OF AD HOC NETWORK

Component

STATUS

TRANSMITTING/
RECEIVING STATUS

Component

Component

Component

Initiator

F I G.  2 3

| COMPONENT TRANSMITTING STATUS | (4) STATUS | COMPONENT RECEIVING STATUS |

(3)          (1)

(2)    (5)

Initiator

# FIG. 24

FIG. 25

Initiator    Component    Component    Component    Component
                (A)          (B)          (C)          (D)

COMPONENT SERVICE REQUEST

COMPONENT SERVICE RESPONSE (A)

COMPONENT SERVICE RESPONSE (B)

COMPONENT SERVICE RESPONSE (C)

COMPONENT SERVICE RESPONSE (D)

· GENERATING SERVICE GRAPH
· SELECTING SERVICE BY USER
· DETERMINING PATH

COMPONENT SERVICE START (A)

COMPONENT SERVICE START (C)

F I G. 2 6

38

COMPARING BRANCH CONNECTED TO TWO COMPONENTS — S40

CLASS OF INPUT DATA IS SUBCLASS OF OUTPUT DATA? — S41

No

Yes — S42

GENERATING BRANCH (WEIGHT)

ALL BRANCHES GENERATED? — S43

No

Yes

GENERATION OF PATH PRIORITY
· SHORTER PATH LENGTH
· HEAVIER WEIGHT OF BRANCH — S44

SELECTING SERVICE BY USER — S45

GENERATING DATA TO BE PASSED TO COMPONENT EXISTING IN PATH — S46

F I G.   2 7

CD PLAYER

PORTABLE
MD PLAYER

MOBILE PHONE
MUSIC
DISTRIBUTION
SERVER

MP3-PCM VOICE
DATA
CONVERSION
ADAPTER

SPEAKER

HEADPHONE

F I G. 2 8

FIG. 29

F I G. 30

EP 1 435 752 A1

F I G.  3 1

43

CD PLAYER

PORTABLE
MD PLAYER

MOBILE PHONE
MUSIC
DISTRIBUTION
SERVER

MP3-PCM VOICE
DATA
CONVERSION
ADAPTER

SPEAKER

HEADPHONE

Initiator

F I G. 3 2

CD PLAYER

PORTABLE
MD PLAYER

TABLE OF
CONTENTS

TABLE OF
CONTENTS

MP3-PCM VOICE
DATA CONVERSION
ADAPTER

TABLE OF
CONTENTS

MOBILE PHONE
MUSIC
DISTRIBUTION
SERVER

TABLE OF
CONTENTS

SPEAKER

TABLE OF
CONTENTS

HEADPHONE

TABLE OF
CONTENTS

Initiator

F I G.  3 3

| CLASS OF COMPONENT | INPUT CLASS | OUTPUT CLASS | STATUS |
|---|---|---|---|
| VOICE OUTPUT ↑ MUSIC PERFORMANCE ↑ CD PLAYER | NONE | VOICE ↑ PCM VOICE | MUSIC INFORMATION PERFORMANCE TIME |

F I G. 3 4

| CLASS OF COMPONENT | INPUT CLASS | OUTPUT CLASS | STATUS |
|---|---|---|---|

VOICE OUTPUT

NONE

VOICE

MUSIC INFORMATION PERFORMANCE TIME

↑

MUSIC PERFORMANCE

PCM VOICE

↑

PORTABLE MD PLAYER

F I G. 3 5

| CLASS OF COMPONENT | INPUT CLASS | OUTPUT CLASS | STATUS |
|---|---|---|---|
| VOICE OUTPUT | NONE | VOICE | MUSIC INFORMATION PERFORMANCE TIME |
| MUSIC PERFORMANCE | | PCM VOICE | |
| MOBILE PHONE MUSIC DISTRIBUTION SERVER | | MP3 VOICE | |

FIG. 36

| CLASS OF COMPONENT | INPUT CLASS | OUTPUT CLASS | STATUS |
|---|---|---|---|
| VOICE CONVERSION | VOICE | VOICE | |
| ↑ | ↑ | ↑ | NONE |
| MP3-PCM VOICE DATA CONVERSION ADAPTER | PCM VOICE | PCM VOICE | |
| | ↑ | | |
| | MP3 VOICE | | |

FIG. 37

| CLASS OF COMPONENT | INPUT CLASS | OUTPUT CLASS | STATUS |
|---|---|---|---|
| VOICE OUTPUT | VOICE | NONE | VOLUME |
| ↑ | ↑ | | |
| SPEAKER | PCM VOICE | | |

F I G. 3 8

| CLASS OF COMPONENT | INPUT CLASS | OUTPUT CLASS | STATUS |
|---|---|---|---|
| VOICE OUTPUT | VOICE | NONE | VOLUME |
| ↑ | ↑ | | |
| HEADPHONE | PCM VOICE | | |

F I G.  3 9

51

CD PLAYER

PORTABLE
MD PLAYER

MOBILE PHONE
MUSIC
DISTRIBUTION
SERVER

PCM VOICE

PCM VOICE

PCM VOICE

PCM VOICE

MP3 VOICE

MP3-PCM VOICE
DATA
CONVERSION
ADAPTER

PCM VOICE

PCM VOICE

SPEAKER

HEADPHONE

Initiator

F I G. 4 0

```
LIST OF SERVICES

<01> CD PLAYER → SPEAKER
<02> CD PLAYER → HEADPHONE
<03> PORTABLE MD PLAYER → SPEAKER
<04> PORTABLE MD PLAYER → HEADPHONE
<05> MOBILE PHONE MUSIC DISTRIBUTION SERVER → MP3-PCM
     VOICE DATA CONVERSION ADAPTER → HEADPHONE
<06> MOBILE PHONE MUSIC DISTRIBUTION SERVER → MP3-PCM
     VOICE DATA CONVERSION ADAPTER → SPEAKER
```

# F I G.  4 1

CD PLAYER

PORTABLE
MD PLAYER

EXIT NOTIFICATION

EXIT NOTIFICATION

MOBILE PHONE
MUSIC
DISTRIBUTION
SERVER

MP3-PCM VOICE
DATA
CONVERSION
ADAPTER

SPEAKER

EXIT NOTIFICATION

HEADPHONE

Initiator

F I G. 4 2

CD PLAYER

SPEAKER

PORTABLE
MD PLAYER

PCM VOICE

HEADPHONE

MP3 VOICE

MOBILE PHONE
MUSIC
DISTRIBUTION
SERVER

MP3-PCM VOICE
DATA
CONVERSION
ADAPTER

Initiator

F I G.  4 3

```
LIST OF SERVICES

<05> MOBILE PHONE MUSIC DISTRIBUTION SERVER → MP3-PCM
     VOICE DATA CONVERSION ADAPTER → HEADPHONE
```

F I G.  4 4

CD PLAYER

SPEAKER

STATUS TRANSFER NOTIFICATION

STATUS
(MUSIC VOLUME)

STATUS TRANSFER NOTIFICATION

PORTABLE
MD PLAYER

STATUS
(MUSIC INFORMATION,
ELAPSED TIME)

MP3-PCM
VOICE DATA
CONVERSION
ADAPTER

HEADPHONE

STATUS RECEPTION NOTIFICATION

STATUS RECEPTION NOTIFICATION

Initiator

MOBILE PHONE
MUSIC
DISTRIBUTION
SERVER

F I G. 4 5

PDA : ELECTRONIC MAIL

PIM INFORMATION
MANAGEMENT

MOBILE PHONE : PHONE BOOK

PERSON INFORMATION
CONVERSION ADAPTER

NOTEBOOK PERSONAL
COMPUTER
: SCHEDULE MANAGEMENT

POSITION INFORMATION
CONVERSION ADAPTER

F I G. 4 6

INFORMATION PROVIDER 16

NETWORK 15

14 13 12 11

| COMMUNICATIONS INTERFACE | RAM | ROM | CPU |
|---|---|---|---|

BUS 10

20 18 17

| INPUT/OUTPUT DEVICE | READING DEVICE | STORAGE DEVICE |
|---|---|---|

PORTABLE STORAGE MEDIUM 19

FIG. 47

EP 1 435 752 A1

EP 1 435 752 A1

# INTERNATIONAL SEARCH REPORT

| | International application No. |
|---|---|
| | PCT/JP01/08941 |

**A. CLASSIFICATION OF SUBJECT MATTER**
Int.Cl⁷ H04Q9/00

According to International Patent Classification (IPC) or to both national classification and IPC

**B. FIELDS SEARCHED**

Minimum documentation searched (classification system followed by classification symbols)
Int.Cl⁷ H04Q9/00-9/16

Documentation searched other than minimum documentation to the extent that such documents are included in the fields searched
Jitsuyo Shinan Koho 1926-2001 Kokai Jitsuyo Shinan Koho 1971-2001
Toroku Jitsuyo Shinan Koho 1994-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-45575 A (Matsushita Electric Ind. Co., Ltd.), 16 February, 2001 (16.02.2001) (Family: none) | 1-17 |
| A | JP 2001-186213 A (Toshiba Corporation), 06 July, 2001 (06.07.2001) (Family: none) | 1-17 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 January, 2002 (07.01.02) | 15 January, 2002 (15.01.02) |

| Name and mailing address of the ISA/ | Authorized officer |
|---|---|
| Japanese Patent Office | |
| Facsimile No. | Telephone No. |

Form PCT/ISA/210 (second sheet) (July 1992)

60